(19) **Europäisches Patentamt / European Patent Office / Office européen des brevets**

(11) **EP 2 572 359 B1**

(12) **EUROPEAN PATENT SPECIFICATION**

(45) Date of publication and mention
of the grant of the patent:
**13.12.2017 Bulletin 2017/50**

(51) Int Cl.:
**G21B 1/03** *(2006.01)*     **G21B 1/19** *(2006.01)*

(21) Application number: **11783857.3**

(86) International application number:
**PCT/US2011/000868**

(22) Date of filing: **17.05.2011**

(87) International publication number:
**WO 2011/146113 (24.11.2011 Gazette 2011/47)**

(54) **ICF TARGETS AND CHAMBERS**

TRÄGHEITSFUSIONSZIELE UND KAMMERN DAFÜR

CIBLES DE FUSION PAR CONFINEMENT INERTIEL (ICF) ET CHAMBRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.05.2010 US 395762 P**
**17.05.2010 US 395745 P**

(43) Date of publication of application:
**27.03.2013 Bulletin 2013/13**

(73) Proprietor: **Innoven Energy Partners**
**Colorado Springs, CO 80920 (US)**

(72) Inventors:
• **HUNTER, Robert, O., Jr.**
**Aspen**
**CO 81611 (US)**
• **SOWLE, David, H.**
**Santa Maria**
**CA 93454 (US)**
• **GALLOWAY, Conner, D.**
**Colorado Springs**
**CO 80924 (US)**
• **VALYS, Alexander, V.**
**Colorado Springs**
**CO 80924 (US)**

(74) Representative: **Thompson, Andrew John et al**
**Withers & Rogers LLP**
**4 More London Riverside**
**London SE1 2AU (GB)**

(56) References cited:
| | |
|---|---|
| CA-A1- 2 649 664 | US-A- 3 489 645 |
| US-A- 4 252 607 | US-A- 4 263 095 |
| US-A- 4 464 413 | US-A1- 2002 141 537 |
| US-A1- 2008 063 132 | US-A1- 2008 063 132 |
| US-B2- 7 663 119 | US-B2- 7 663 119 |

• LEEPER ET AL.: "Z pinch driven inertial confinement fusion target physics research at Sandia National Laboratories", PLASMA PHYSICS AND FUSION TECHNOLOGY (G5211) - 17. IAEA FUSION ENERGY CONFERENCE; YOKOHAMA (JAPAN); 19-24 OCT 1998, vol. 30, no. 42, 1999, pages 1283-1294,
• CUNEO ET AL.: "progress in symmetric ICF capsule implosions and wire-array z-pinch source physics for double-pinch-driven hohlraums", PLASMA PHYSICS AND CONTROLLED FUSION, vol. 48, no. 2, 13 January 2006 (2006-01-13), pages R1-R35, DOI: 10.1088/0741-3335/48/2/R01

**EP 2 572 359 B1**

**Description**

CROSS-REFERENCES TO RELATED APPLICATIONS

This application is a non-provisional, and claims the benefit, of commonly assigned U.S. Provisional Application No. 61/395,745, filed May 17, 2010, entitled "High-Yield Inertial Confinement Fusion Containment Chambers and Power Reactors". This application is a non-provisional, and claims the benefit, of commonly assigned U.S. Provisional Application No. 61/395,762, filed May 17, 2010, entitled "ICF Targets With Directional Output and Altered Output Spectrums".

BACKGROUND

Nuclear fusion refers to a type of reaction that occurs when two light nuclei combine to produce heavier nuclei and/or nuclear particles. A small amount of mass is lost in this process. According to the formula of mass-energy equivalence $E=mc^2$, this mass is converted to energy that is eventually converted into thermal energy in the material surrounding the reaction.

These reactions typically occur when a fusion fuel has been heated to a high enough temperature to form a plasma. The temperature at which a plasma under goes fusion varies depending on the type of material. Ignition occurs when a plasma of fusion fuel is heated to a high enough temperature that the fuel becomes hot enough to heat itself through self heating. That is, ignition occurs when the energy released from the fusion reaction exceeds the energy lost through other mechanisms (e.g., Bremsstrahlung radiation). The temperature at which this occurs is called the ignition temperature. For D-T fuel, the ignition temperature can range from 2-10 keV depending on the physical properties of the plasma. After ignition, self heating of the fuel can cause the fuel to rapidly reach ion temperatures of about 100 keV or more. This is often referred to as runaway burn.

Once the fuel has been ignited, confinement refers to the challenge of keeping the fuel from expanding and thus cooling and ceasing to burn long enough to produce the desired amount of energy. The reaction should produce significantly more energy than is used to ignite and confine the reaction. While heating the fuel to ignition is simply a matter of delivering energy to it, confinement is more challenging. Currently there is no way to confine a plasma heated to ignition temperatures or above with a mechanical system. For instance, any solid containment mechanism that comes into contact with the fuel would become instantly vaporized and/or would drastically cool the plasma and quench the burn.

Examples of ICF targets are disclosed in Leeper et al..: "Z pinch driven inertial confinement fusion target physics research at Sandia National Laboratories", PLASMA PHYSICS AND FUSION TECHNOLOGY (G5211) - 17. IAEA FUSION ENERGY CONFERENCE; YOKOHAMA (JAPAN); 19-24 OCT 1998, vol. 30, no. 42, 1999, pages 1283-1294.

BRIEF SUMMARY

According to a first aspect of the invention, there is provided an inertial confinement fusion target according to claim 1.

In some embodiments, the one or more radiation windows may include a portion of the spherical case with a second thickness less than a first thickness of the spherical case. In some embodiments, the one or more radiation windows may include two radiation windows located within symmetrically opposed portions of the spherical case. In some embodiments, the one or more radiation windows may include a second material that is optically thinner than the first material of the spherical case. The second material may include at least a low-Z or medium-Z material.

In some embodiments, the target may include one or more collimators. Each collimator may be coupled with one of the respective radiation windows. The one or more collimators may include one or more cone shaped or cylindrical shaped collimators.

In some embodiments, the target may include one or more enclosure elements. Each enclosure element may define an opening and each collimator coupled with a portion of a respective enclosure element surrounding a respective opening. In some embodiments, the one more or more radiation windows may define a circular region of the spherical case.

Some embodiments may include one or more enclosure elements partially enclosing the inertial confinement fusion target.

In some embodiments, the one or more enclosure elements may include a cylindrical sleeve. In some embodiments, one or more enclosure elements may include two or more disks. In some embodiments, one or more enclosure elements may include a high-Z material. In some embodiments, the target is centered with respect to the one or more enclosure elements utilizing a one or more stalks coupled with the target and the one or more enclosure elements. In some embodiments, the target may be configured to emit radiation that ablates an inner surface of the one or more enclosure elements.

According to a second aspect of the invention, there is provided a method of directing output from an inertial confinement fusion target according to claim 11.

In some embodiments of the method, the output may includes radiation and/or target debris.

Directing output from the inertial confinement window may include ablating an inner surface of the enclosure elements utilizing black-body radiation from the inertial confinement fusion target. Material ablated from the inner surface may interact with the target debris. In some embodiments, the one or more enclosure elements may include a cylindrical sleeve.

In some embodiments of the method, the one or more radiation windows may include a portion of the spherical case of the ICF target with a second thickness less than a first thickness of the spherical case. In some embodiments, the one or more radiation windows may include two radiation windows located within symmetrically opposed portions of the spherical case. The one or more radiation windows may include a second material that is optically thinner than the first material of the spherical case in some embodiments.

In examples not forming part of the present invention there are provided inertial confinement fusion reaction chambers for energy production. In some embodiments, an ICF chamber can include, a cylinder, a plurality of beam channels and a target insertion mechanism. The cylinder can be defined by an inner radius, an outer radius, a length, and two ends. The difference between the outer radius and the inner radius of the cylinder can be greater than 0.75 meters. The plurality of beam channels can be embedded or bored within the cylinder. The target insertion mechanism can be any configuration that can secure a target within a inner portion of the chamber. A number of configurations of the chamber are disclosed. For example: The chamber can also include a cylindrical wall surrounding the cylinder. This wall may include two end caps at each channels can be configured to allow laser beams to enter the cylinder through the beam channels and converge within the cylinder. The cylinder can be made from a graphite material. Radiation tiles can be coupled with the inside of the cylinder. Coolant channels can be disposed within the cylinder. A number of additional configurations of the chamber are disclosed. For example: The difference between the outer radius and the inner radius can be greater than or equal to 1 m. Some of the plurality of beam channels are disposed cylindrically around the circumference of the cylinder. Tritium breeding mechanisms can be employed within the cylinder that may be filled at least in part with lithium. A sacrificial layer can be disposed on the inner surface of the cylinder. A plurality of injection nozzles disposed within the cylinder that can be included and configured to inject inert gas into the chamber. A plurality of injection nozzles can be included and configured to deposit a sacrificial layer on the inner surface of the chamber.

Examples not forming part of the present invention are directed to inertial confinement fusion reaction chambers that include a cylindrical inner vessel, two cylindrical outer vessels, and a plurality of beam channel. The cylindrical inner vessel can be defined by an inner radius, a length, a thickness, a central axis, and two ends. Each outer vessel can be defined by a length, an inner radius, a thickness, a central axis, and two ends. Each outer pressure vessel can be coupled with one end of the inner vessel such that the central axis of the inner pressure vessel is aligned with the central axis of the outer vessels. The plurality of beam channels can be bored within either or both the inner vessel or either of the outer vessels and can be angled to intersect at a point within the inner pressure vessel.

A number of configurations of the chamber are disclosed. For example: The radius of the outer pressure vessels can be less than the radius of the inner pressure vessel. The thickness of the inner vessel can be greater than 0.75 m. The thickness of the inner vessel can be greater than 1.0 m. Either or both the inner vessel or either of the outer vessels can be made from graphite. Radiation-absorbing plates can be disposed on the inner surface of either or both the inner vessel or either of the outer vessels. Coolant channels can be embedded within either or both the inner vessel or either of the outer vessels. Tritium breeding mechanisms can also be disposed within any of the cylindrical vessels. Tritium breeding mechanisms can include channels formed within the cylinder filled at least in part with lithium. Debris silencing layers can be included.

BRIEF DESCRIPTION OF THE DRAWINGS

A further understanding of the nature and advantages of the present invention may be realized by reference to the following drawings. In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label. In addition, the various components shown in the drawings may not be to scale individually and/or with respect to each other.

Figure 1-1 is a block diagram of an inertial confinement fusion system in accordance with various embodiments.

Figure 2-1 is an example of an inertial confinement fusion system in accordance with various embodiments.

Figure 3-1 shows a cross-section of an inertial confinement fusion target in accordance with various embodiments.

Figure 4-1 shows a cross-section of an inertial confinement fusion target configured to produce radiation output in a black-body spectrum in accordance with various embodiments.

Figures 5A-1 and 5B-1 show cross-sections of an inertial confinement fusion target ICF target with radiation windows in the case in accordance with various embodiments.

Figure 6-1 shows a cross-section an inertial confinement fusion target with two cylindrical collimators to direct radiation output in accordance with various embodiments.

Figures 7A-1 and 7B-1 show cross-sections of an output directing device for an inertial confinement fusion target in accordance with various embodiments.

Figures 8A-1 and 8B-1 show cross-sections of an output directing device for an inertial confinement fusion target with two enclosure elements surrounding the target to direct the radiation and/or debris output of the target in different directions in accordance with various embodiments.

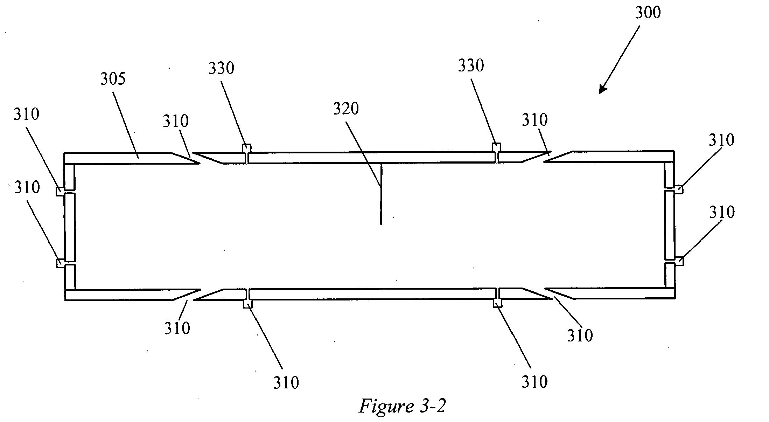

Figure 3-2 is a high yield fusion chamber .

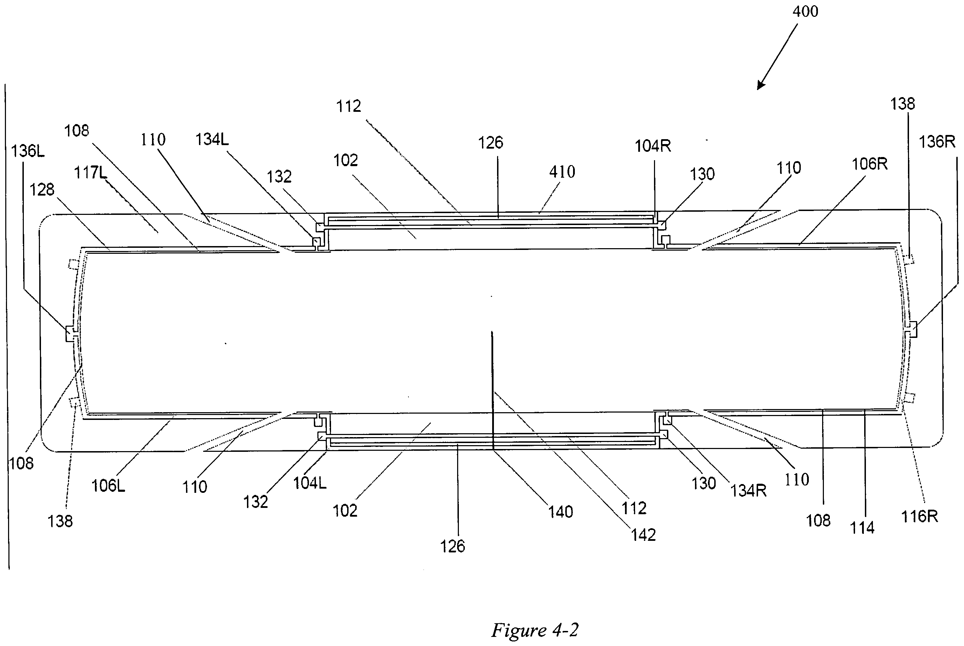

Figure 4-2 is an example of another chamber .

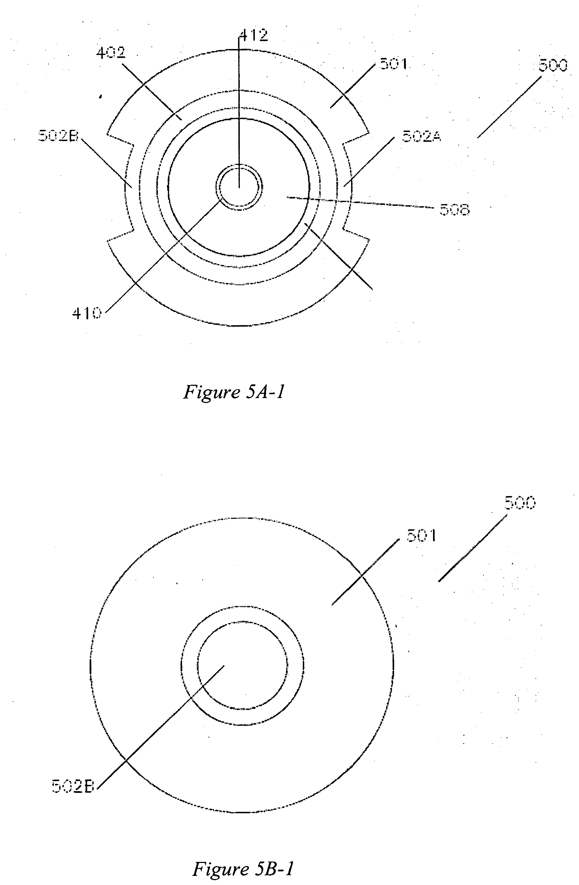

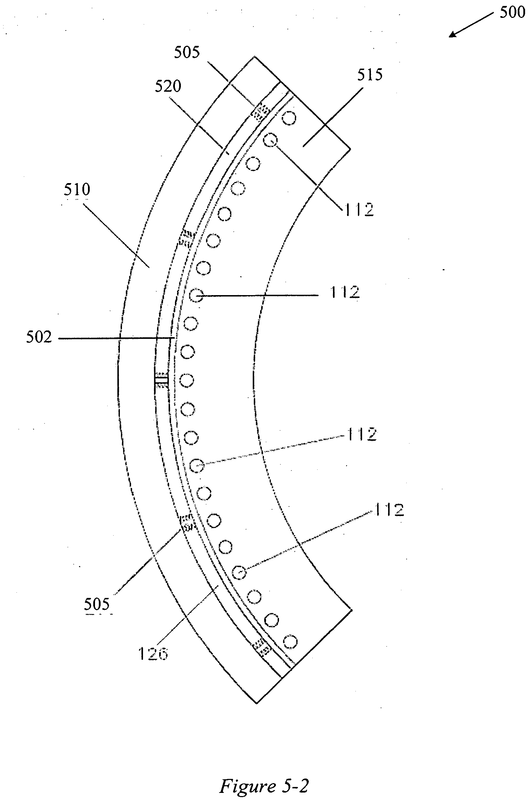

Figure 5 shows partial end view cross-section of a chamber wall.

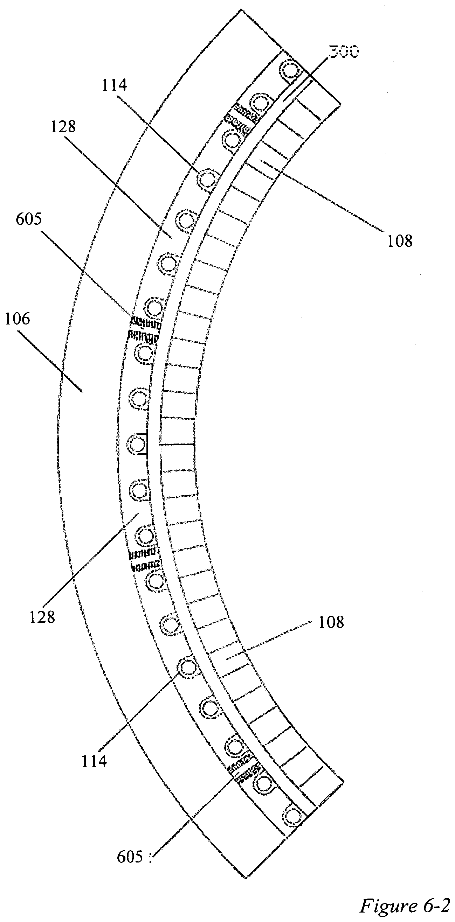

Figure 6-2 illustrates a cross-section of a wall.

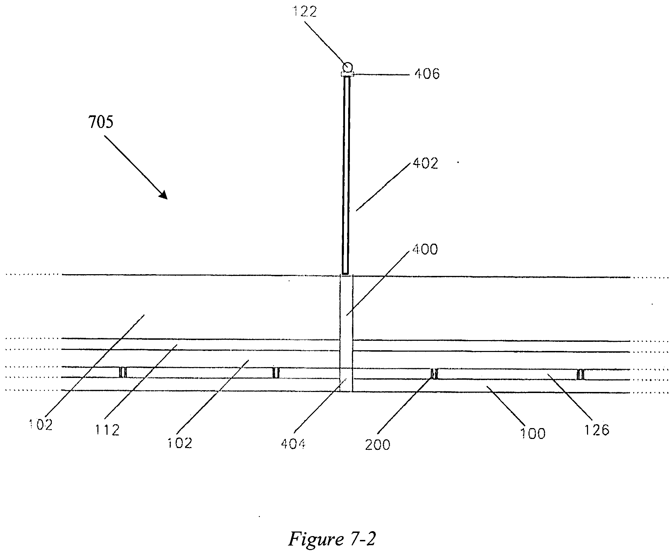

Figure 7-2 is an insertion rod.

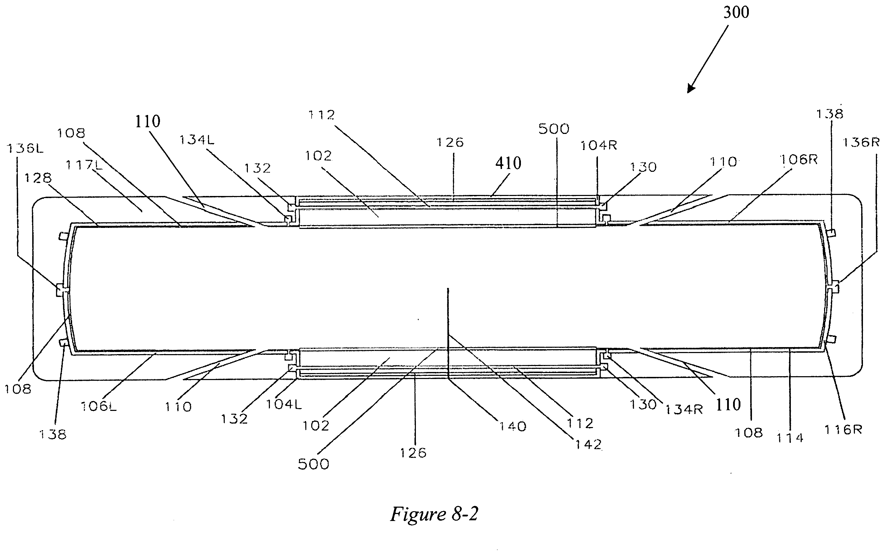

Figure 8-2 is a cross-section of a reactor that allows the use of targets that have poor radiation directionality.

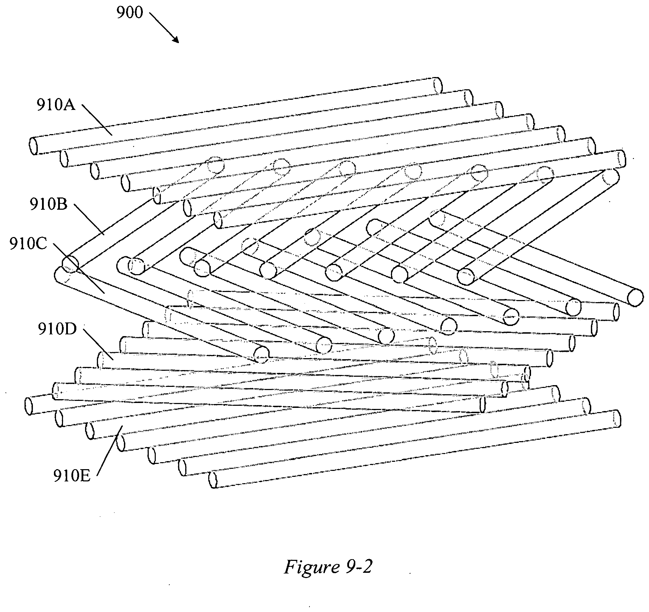

Figure 9-2 shows a debris silencer layer.

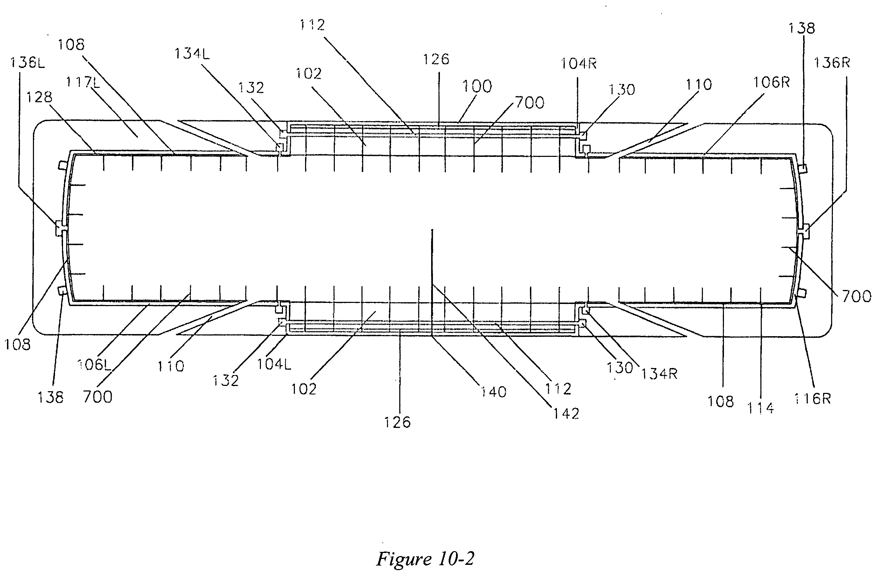

Figure 10-2 is a cross-section of a chamber including gas injection nozzles configured to deposit a sacrificial layer on the inner surface of the chamber.

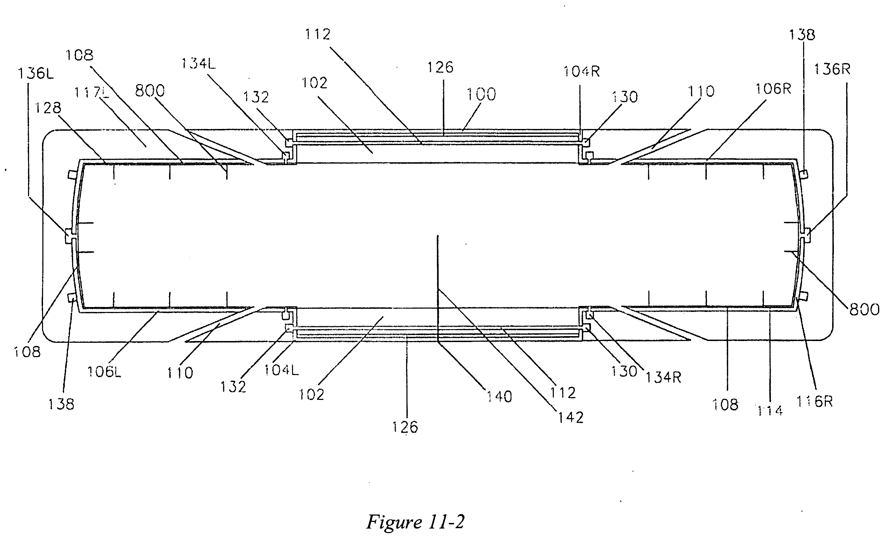

Figure 11-2 is a cross-section of a chamber including gas injection nozzles configured to inject an inert gas into the chamber.

These figures are not drawn to scale.

DETAILED DESCRIPTION

**Introduction**

The term "isentropic drive mechanism" refers to a drive mechanism that is designed or utilized to compress material (such as fusion fuel) in an isentropic manner. "Isentropic" means compressing material while minimizing the total entropy increase (heating) of the material.
Isentropic compression is therefore the most efficient way to compress material. When imploding a sphere or shell of material, such as an ICF target, isentropic compression requires that the drive mechanism deliver pressure to the material in a specific way over the entire duration of the compression, utilizing a low pressure initially that is increased over the course of the compression according to a mathematical formula. This can be difficult to achieve, and complicates the design of both the target drive mechanism and the driver that delivers energy to the drive mechanism (such as a laser or heavy ion beam).
The term "quasi-isentropic drive mechanism" refers to a drive mechanism that approximates an ideal, perfectly-isentropic compression using a means other than a ramped pressure profile. For instance, drive mechanisms that compress material by producing a series of shocks of increasing strength may approach the efficiency of a perfectly-isentropic compression. While in some circumstances simpler than perfectly-isentropic versions, these drive mechanisms are still complex to engineer.
The term "impulsive drive mechanism" refers to a drive mechanism that compresses material impulsively, typically by the production of a single shock wave that accelerates the material and causes it to move inward. The pressure produced by an impulsive drive mechanism is typically highest at the beginning of the implosion, and decreases afterward. Impulsive drive mechanisms are limited in the amount of compression they can produce and in the efficiency of compression achieved. They may be simpler to design and use than other drive mechanisms. For instance, an impulsive drive mechanism may not require that the driver (laser, heavy ion beam, etc.) be active during the entire course of the implosion, but may instead deliver its energy over a shorter timescale, potentially short comparable to the timescale of hydrodynamic motion in the target.

The term "shock" refers to sharp discontinuities in the flow of material. These discontinuities can be induced in any hydrodynamic variables such as temperature, pressure, density, velocity, etc.

The term "shock convergence" refers to the convergence of a shock which may travel from an outer shell and to an inner shell. It is calculated as the ratio of the outer radius of an inner shell, $R_c$, and the inner radius of an outer shell $R_o$. That is, $SC = \dfrac{R_o}{R_c}$. For instance, given a first shell with an inner radius of 10 cm and given a second shell disposed within the first shell with a inner radius of 0.5 cm. In this configuration, the shock convergence is 20. Any other combination of inner and outer radiuses can be used.

The term "atom" refers to a particle of matter, composed of a nucleus of tightly-bound protons and neutrons, with an electron shell. Each element has a specific number of protons.

The term "neutron" refers to a subatomic particle with no electrical charge. Their lack of a charge means that free neutrons generally have a greater free range in matter than other particles. The term "proton" refers to a subatomic particle with a positive electrical charge. The term "electron" refers to a subatomic particle with a negative electrical charge, exactly opposite to that of a proton and having less mass than a proton and a neutron. Atoms under ordinary conditions have the same number of electrons as protons, so that their charges cancel.

The term "isotope" refers to atoms of the same element that have the same number of protons, but a different number of neutrons. Isotopes of an element are generally identical chemically, but have different probabilities of undergoing nuclear reactions. The term "ion" refers to a charged particle, such as a proton or a free nucleus.

The term "plasma" refers to the so-called fourth state of matter, beyond solid, liquid, and gas. Matter is typically in a plasma state when the material has been heated enough to separate electrons from their atomic nuclei.

The term "Bremsstrahlung radiation" refers to radiation produced by interactions between electrons and ions in a plasma. One of the many processes that can cool a plasma is energy loss due to Bremsstrahlung radiation.

The product "$\rho r$" refers to the areal mass density of a material. This term refers to a parameter that can be used to characterize fusion burn. This product is expressed in grams per centimeter squared, unless otherwise specified.

The term "runaway burn" refers to a fusion reaction that heats itself and reaches a very high temperature. Because the D-T reaction rate increases with temperature, peaking at 67 keV, a D-T plasma heated to ignition temperature may rapidly self-heat and reach extremely high temperatures, approximately 100 keV, or higher..

The term "burn fraction" refers to the percentage of fusion fuel consumed during a given reaction. The greater the burn fraction, the higher the energy output.

The term "convergence" refers to how much a shell (or material) has been compressed radially during implosion. For instance, a shell that starts with a radius of 0.1 cm, $R$, and is compressed to a radius of 0.01 cm, $R_c$, during implosion has a convergence of 10. That is, $C = \dfrac{R}{R_c}$.

The term "high-Z material" is a material comprised of an element or elements that have an average number of protons greater than or equal to 48. The term "medium-Z material" is a material comprised of an element or elements that have an average number of protons less than 48 but greater than 5. The term "low-Z material" is a material comprised of an element or elements that have an average number of protons less than or equal to 5. A low-Z material can be a single material or an alloy of materials with an average number of protons less than or equal to 5.

Nuclear fusion refers to a type of reaction that occurs when certain atomic nuclei collide. In most of these reactions, two light nuclei combine, producing heavier nuclei and/or nuclear particles. In the process, some of the energy in the nuclear bonds holding the nuclei together is released, usually settling in the form of thermal energy (heat) in the material surrounding the reacting particles.

These reactions only occur between atomic nuclei that are very energetic, such as those that have been heated to a high temperature to form a plasma. The specific temperatures vary between reactions. The reaction between deuterium and tritium, two hydrogen isotopes, is generally considered to require the lowest temperature for ignition. As other fusion reactions require yet-higher temperatures, most nuclear fusion power concepts envision the use of D-T fuel.

Two challenges in using nuclear fusion to produce power are referred to as ignition and confinement. Achieving ignition requires heating a plasma of fusion fuel until it becomes hot enough to heat itself, meaning the energy released from fusion reactions exceeds the energy lost through various processes, such as Bremsstrahlung radiation and hydrodynamic expansion. The temperature at which this occurs is known as the "ignition temperature", which for D-T fuel can range from 2-10 keV, depending on the physical properties of the plasma. After ignition, self-heating in the fuel can cause it to reach temperatures of 100 keV or more.

Once fuel has been ignited, confinement refers to the challenge of keeping the fuel from expanding (thus cooling and ceasing to burn) long enough for it to produce the desired amount of energy: at least as much energy as was required to ignite it and keep it confined, and hopefully significantly more. While heating the fuel to ignition is simply a matter of delivering energy to it, confinement is more challenging. There is no way to confine a plasma heated to ignition temperature or beyond with a simple mechanical system. Any solid substance, such as the metal wall of a container, that comes into contact with a fusion plasma would either become instantly vaporized, or drastically cool the plasma and stop the burn itself, or both.

One method of confinement uses a magnetic field to keep the fuel from expanding. This is referred to as Magnetic Confinement Fusion. Magnetic confinement has many inherent difficulties and disadvantages, and economical power generation from an MCF facility appears decades away.

Another approach takes advantage of how the characteristics of fusion burn change with fuel amount and density. At ordinary densities and practicable amounts, a D-T plasma heated to ignition temperature will disassemble (expand and stop burning) before producing anywhere near the energy required to originally heat it. However, as the density of a given amount of fuel is increased, the rate at which the fuel will burn increases faster than the rate at which it will expand. This means that, if the fuel can be compressed sufficiently before heating it, the fuel's own resistance to motion (inertia) will keep it from expanding long enough to yield significant energy. This approach is referred to as Inertial Confinement Fusion ("ICF").

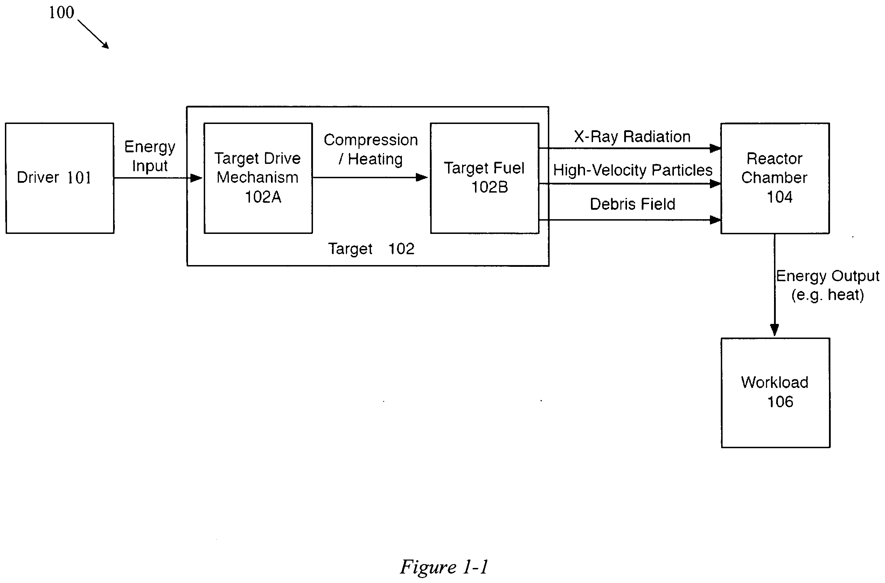

Figure 1 is a block diagram of inertial confinement system 100. This system can use the various double shelled targets described in the many embodiments described herein. ICF System 100 can include driver 101 that can include such things as an array of laser or ion beams to deliver energy to target 102. Target 102 is often, but not necessarily spherical. Target 102 can include two components: target drive mechanism 102A, to which energy from the driver 101 is delivered; and target fuel 102B. Target drive mechanism 102A can be designed to use energy from the driver 101 to compress and heat target fuel 102B to high densities and/or temperatures causing ignition. Target fuel 102B can burn in a fusion reaction producing energy in the form of high-velocity subatomic particles, x-ray radiation, and an expanding debris field. These can be absorbed in target chamber 104, usually converted to heat, which can then be used in a standard thermal cycle to power workload 106, such as an electrical generating turbine. ICF system 100 can produce energy in a pulsed fashion, by repeatedly igniting and burning targets 102.

ICF system 100 is an example of an ICF system. While this system shows one specific configuration, many variations are possible. In some embodiments, ICF system 100 can use at least part of the energy produced by each target 102 to energize driver 101 for each additional shot, as well as to power workload 106. Additionally, some target chamber designs may capture energy produced by the targets using means other than or in addition to conversion to thermal energy, such as the direct conversion of the kinetic energy of charged particles to electricity. Furthermore, certain designs of target 102 may involve a more complex relationship between drive mechanism 102A and fuel 102B, or a simpler relationship in which both of these represent the same component.

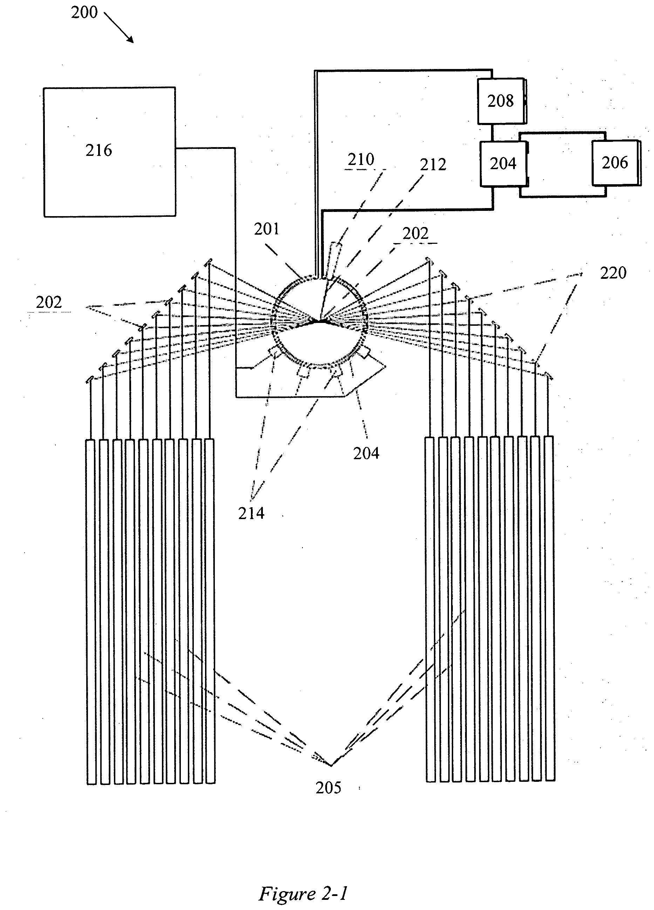

ICF power plant system 200 shown in Figure 2 is an example of a generic ICF power plant system. Any other power plant systems may be used. In this system, targets 202 are ignited inside target chamber 201. The drive mechanism can include of a multitude of independent laser beam lines 205, producing laser beams which are directed into the target chamber 201 by an arrangement of beam-handling optics 202. Channels 204 in the walls of the reactor chamber 201 can carry a liquid lead-lithium eutectic coolant, which carries away the heat produced by burning of targets 202. After leaving the target chamber 201, the coolant can pass through a heat exchanger system 206, producing steam which can be used to power any industrial workload 206. Next, the coolant can pass through a tritium separation plant 208, which extracts tritium (produced from neutron reactions with the lithium), from the coolant.

High-speed insertion mechanism 210 can be used to insert targets into the chamber, in this illustration utilizing a disposable stalk 212. Exhaust pumps 214 maintain the required level of vacuum in the target chamber 201 for laser beams to propagate, and route the target debris extracted from the chamber to an exhaust handling system 216. The exhaust handling system 216 separates unburnt tritium from the other target debris. Along with the tritium separated from the coolant by the tritium separation plant 208, this tritium is used to fuel subsequent targets.

In addition to the production of energy, ICF systems can also be used to investigate physical processes that occur under conditions of extremely high temperature and pressure. ICF facilities used for research purposes, as well as prototype, demonstration, and experimental facilities, and other ICF facilities not used for commercial energy production, may not include some of the features shown on this diagram, such as the cooling system, tritium separation system, and debris handling system.

**Targets**

Embodiments provide devices, systems, and/or methods for directing radiation and/or debris from an inertial confinement fusion target. In some embodiments, the radiation spectrum of an ICF target can be altered by enclosing the target in a high-opacity metal case. Such a case may cause radiation produced by the burning fuel to equilibrate to a black-body distribution. The case can then radiate black-body radiation at the case temperature. Black-body radiation in the keV range may penetrate further on average into a target chamber wall material than the volume emission spectra that is produced by optically thin targets, thus allowing a higher wall fluence without exceeding the wall material temperature limits, such as its melting or vaporization temperature.

Some embodiments may provide one or more radiation windows that can be included in the case in order to provide directional output of radiation, which may be black-body. These radiation windows may include physically and/or optical thinner regions of the case that may begin to radiate before the remainder of the case, thus allowing the target to direct the radiation component of the target's output in specific directions.

Some embodiments may include an inertial confinement fusion target that can also be surrounded with one or more enclosure elements including, but not limited to, a cylindrical sleeve, a pair of disks, or a similar enclosure, such that when the target begins to radiate, material ablated off the enclosure element by the radiation may inhibit the outward expansion of the target debris in certain directions, thus directing the debris component of the target's output in specific directions.

The altered radiation spectrum of some embodiments may allow them to be safely contained in smaller target chambers than conventional ICF targets. The capability of some embodiments to generate directional radiation and debris output may allow them to be used in non-spherical reactor chambers, such as cylindrical reactors, which may be simpler and more economical to engineer and build.

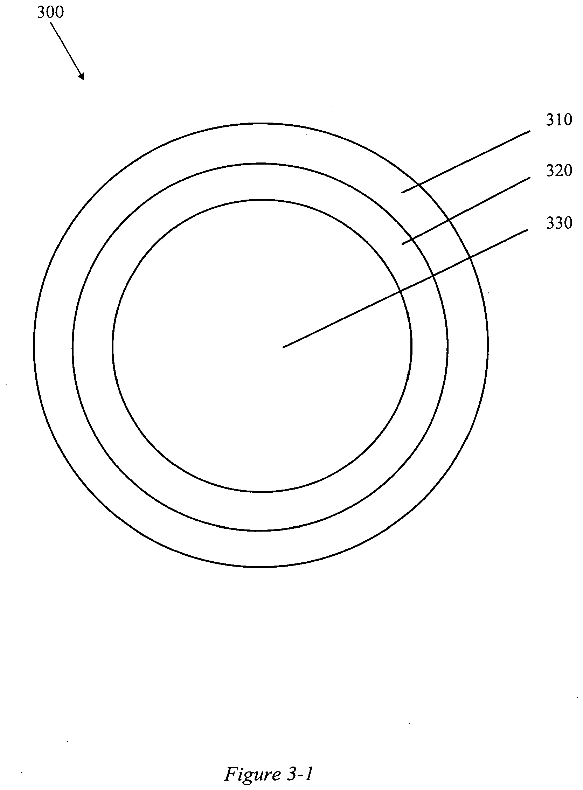

Figure 3 shows an example of an ICF target 300 in accordance with various embodiments. Target 300 may be utilized with systems such as system 100 and/or 200, for example. Embodiments such as target 300 may include case 310 that may be made from medium-Z and/or high-Z material. Target 300 also may include one or more drive mechanism layers 320. Case 310 may be part of drive mechanism layers 320 in some embodiments. Drive mechanism layers such as drive mechanism layers 320 may include, but are not limited to, propellant layers, pusher layers, and/or hohlraum regions. Drive mechanism layers 320 may make up a drive mechanism for ICF targets that may drive inner target 330 of target 300. Inner target 330 may include different components including, but not limited to, one or more fuel layers. Some inner targets such as inner target 330 may include other structures, such as shell layers and/or cap layers.

Examples of some drive mechanisms that include drive mechanism layers such as drive mechanism layers 320 may include but are not limited to, laser-driven propellant drives, x-ray driven propellant drives, and/or spherical hohlraum drives.

In some embodiments, case 310 may be configured as a spherical metal case. Cases may be made of a dense medium-Z and/or high-Z material. In some embodiments, the case may be made of tungsten, though other embodiments may include other materials. In these targets, the case generally inhibits the outward expansion of a propellant or pusher, forcing it to expand inwards and compress the fusion fuel. In spherical hohlraum drive targets, for example, the inner surface of the case may serve as a hohlraum wall, trapping the radiation field produced by laser deposition on the inner surface of the case. In some embodiments, the case has up to several hundred channels manufactured into it, providing a means by which laser beams can heat the material inside. These channels may be extremely narrow (approximately 100 micrometers in radius in some embodiments) and are generally blocked within a few nanoseconds by ablated material once the laser is fired. If this does not occur, they can be closed by a second energy pulse specifically intended for this purpose in some embodiments.

By choosing the right dimensions and materials for the case, a case can serve an additional purpose - changing the spectrum of radiation emitted by the target during burn from a spectrum produced by an optically-thin region, as would be emitted by conventional ICF targets, to a mostly black-body spectrum that can be contained more economically. A case may also be added to targets that do not already include one in order to achieve the same effect.

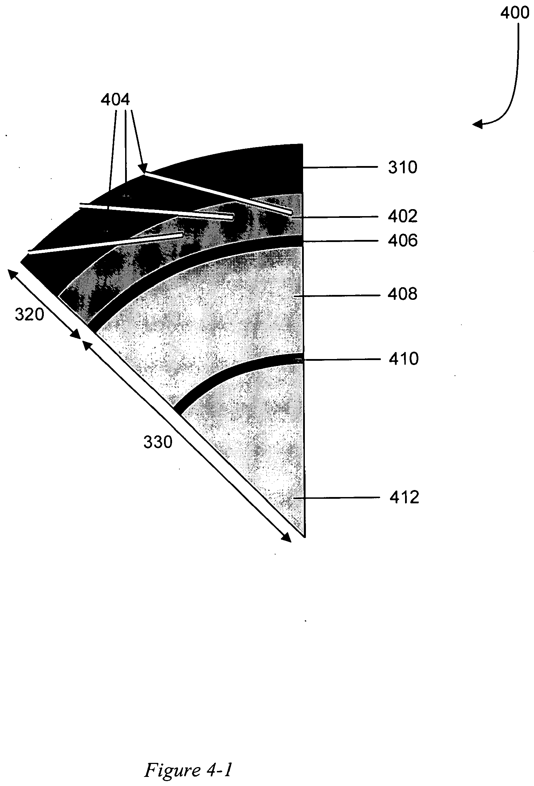

Figure 4 illustrates an example of an ICF target 400 in accordance with various embodiments that include a case. Target 400 may be an example of target 300 of Figure 3. Target 400 may be utilized with systems such as system 100 and/or 200, for example. Target 400 includes case 310. Case 310 may be made of a medium-Z and/or high-Z material. In one embodiment, case 310 may be made primarily of tungsten. In some embodiments, case 310 may include a mixture of other high-Z materials including, but not limited to gold, osmium, lead, iridium, and/or platinum. The materials out of which case 310 may be fabricated may make case 310 optically thick at all radiation frequencies. Beam channels 404 may be manufactured through case 310.

Case 310 may surround propellant 402, which may be part of drive mechanism layers 320. Some embodiments may include additional structures within drive mechanism layers 320, such as other propellant layers, hohlraum regions, etc.. Beam channels 404 may extend into propellant 402 in some embodiments. In some embodiments, propellant 402 may include a foam material, though some embodiments may include solid propellant layers or other materials. Inside propellant 402 is inner target 330. In some embodiments, inner target 330 may be configured as a shock-imploded target configuration. However, virtually any configuration of fuel, shells, and other structures can be used inside propellant 402, more generally inside drive mechanism layers 320. Shock-imploded target configuration includes outer shell 406 surrounding main fuel 408. Outer shell 406 may be made from a medium-Z and/or high-Z material in some embodiments. Main fuel 408 may include a deuterium-tritium gas for example. Inner shell 410 is located interior to main fuel 408. Inner shell 410 may be made from a medium-Z and/or high-Z material in some embodiments. Within inner shell 410 is sparkplug 412, which may include a deuterium-tritium fuel.

In a specific embodiment, target 400 may include case 310 weighing approximately 5.6 gram, with an inner radius of approximately 0.86 cm, and an outer radius of approximately 0.89 cm. Case 310 in the specific embodiment is made primarily of tungsten, but may include a mixture of other high-Z materials such as gold, osmium, lead, iridium, platinum, etc. so as to be optically thick at all desired radiation frequencies. Other materials may be used to achieve this as well. Propellant 402 may include a graphite foam, approximately 0.06 cm thick. Beam channels 404 may include more than one hundred channels manufactured through case 310 and propellant 402, so as to evenly distribute energy throughout propellant 402.

In the specific embodiment, outer shell 406 is made from copper approximately 0.02 cm thick surrounding main fuel 408 of approximately 0.68 cm thick region of D-T at approximately 0.13 grams/cc. Inside main fuel 408 is a tungsten inner shell 410, approximately 0.01 cm thick. Inside inner shell 410 is sparkplug 412 that includes a sphere of D-T fuel at approximately 0.13 grams/cc.

For the specific embodiment of target 400 in operation for example, laser beams may be fired through channels 404. Merely by way of example, lasers beams may deliver 65 MJ to propellant 402, which can result in inward acceleration of outer shell 406, driving a single strong shock through main fuel 308. This shock can implode and ignite sparkplug 412, after which energy produced in sparkplug 412 ignites main fuel 408.

Burning fuel in sparkplug 412 and main fuel 408 may be optically thin in some situations. Without case 310, the energy in these regions radiate could take the form of a spectrum in which most of the energy is carried by photons with lower energy than the region temperature. But in embodiments such as the specific embodiment, with a properly-designed, optically thick case 310, their radiation can form a black-body radiation field, with a temperature set by case 310. This field then can penetrate case 310 as a Marshak wave. Once the wave breaks through case 310 the outside surface of case 310 can radiate in a black-body distribution at approximately 1.5 keV in some embodiments.

A black-body spectrum, typically emitted from a hot optically-thick region, may carry less energy in low-energy photons as compared to an emitting optically-thin region. In the specific embodiment for example, 96% of the energy emitted by case 310 may be in photons with energy larger than the temperature of its outside surface.

Cases such as case 310 may serve to trap the non-neutron component of the yield during runaway burn, and subsequently emit a large fraction of that energy as black-body radiation (in systems that are thick to neutrons, the case will capture some neutron yield as well). Black-body radiation emission may be more advantageous at a given temperature than emission from an optically-thin region, as the high-energy photons, on average, in black-body radiation can penetrate farther into wall material, and can thus deposit more energy per surface area before the material vaporizes.

Merely by way of example, a target such as the specific embodiment of target 400 may yield 30.3 GJ of energy. Approximately 4% of the yield may be in debris, 31% in black-body radiation, and 65% in neutrons leaving the target. The low percentage of energy in debris, along with the radiation being black-body, may allow the use of smaller reactor vessels to contain this target, compared to conventional targets with the same yield.

Adding a case such as case 310 may serve to cause the radiation output of a target, such as target 300 and/or 400 for example, to be mostly black-body. This may allow the use of smaller reactor vessels, as high-energy radiation penetrates further into the reactor wall, thus distributing the energy in the radiation field over more material.

For example, while a 30.3 GJ conventional ICF target may require a chamber with surface area of $8.7 \times 10^8$ cm$^2$ in order to safely contain the radiation spectrum it produces, some embodiments producing that yield may require a chamber with a surface area of less than $1 \times 10^8$ cm$^2$.

In another embodiment, target 400 may be scaled down to that may require a lower input energy. Sparkplug 412 may be approximately 0.084 cm in radius, composed of D-T at approximately 0.17 grams/cc. Inner shell 410 may surrounded sparkplug 412, and be made of tungsten, approximately 0.004 cm thick. Outer shell 406 may have an inner radius of approximately 0.315 cm and an outer radius of approximately 0.340 cm, and be made of copper. Between inner shell 410 and outer shell 406 is main fuel 408, which may be composed of D-T of approximately 0.17 grams/cc. Outside the outer shell 410 is propellant 402, which may be approximately 0.063 cm thick, and made from boron. Surrounding propellant 402 is case 310, which may be made of tungsten and a mix of other high-Z materials, approximately 0.019 cm thick.

With an input energy of 20 MJ, this other embodiment may produce a total yield of 2.75 GJ, for a gain of 138. Case 310 may radiate at approximately 1.5 keV. The output spectrum may have approximately 5% of the energy in debris, 75% in neutrons leaving the target, and 20% in radiation. This output may require a surface area of $3 \times 10^6$ cm$^2$ of normal incidence in order to contain without damage to a graphite wall, and may correspond to a sphere of 5 m radius, or a cylinder of 5 m radius and 15 m length.

In some embodiments, a material for a case may utilize a material with a high average atomic number. This property can provide for a high radiation opacity and shorter radiation mean free path, which may be required to build up a black-body distribution. In some embodiments, a case may be composed of a mixture of materials so as to have a high opacity across all radiation frequencies. Medium-Z materials with lower opacities can still work, but may not work as well.

Some embodiments may utilize the following Equation 1 that approximately describes the maximum allowable black-body radiation fluence on a graphite wall:

$$100 T_{es}^{1.513} \left( \frac{\text{Joules}}{\text{cm}^2} \right) \qquad \text{(Equation 1)}$$

where $T_{es}$ is the temperature (in keV) of the emitting surface. This formula can be used to determine the minimum wall surface area that may be required such that vaporization does not occur. Therefore, by increasing the temperature on the outside surface of a case, one can increase the fluences the target chamber wall can withstand, and build a smaller target chamber.

Maintaining the desired $T_{es}$ on the outside surface of a case may require maintaining a temperature gradient across it, which may be determined by the case density during burn and the material opacity. A thick case may require higher temperatures inside the target to maintain a given $T_{es}$ than a thin case. Some embodiments may utilize as thin a case as possible, while still ensuring that it is optically thick enough to support a good black-body distribution, and physically thick enough to meet the requirements of the drive mechanism in use. A thin case may also ultimately result in less energy in debris.

In addition to producing a more favorable radiation spectrum, it may also be desirable to maximize the temperature of the outside surface of a case in order to increase the outward radiation flux, and maximize the amount of energy emitted as radiation, therefore minimizing the energy left in debris. A simple estimate of the outside surface temperature for a case to radiate energy at a faster rate than it cools by expansion is given by Equation 2:

$$T_{es} > \left( 1.75 \rho \frac{Z}{A} \right)^{\frac{2}{5}} \qquad \text{(Equation 2)}$$

where $\rho$ is the density of the case during and after burn, and $Z$ and $A$ are the case material's average atomic number and atomic mass number, respectively. It may also be necessary for the case to be large and dense enough to remain optically thick while it is radiating, in order to ensure that it continues to radiate black-body radiation. The longer the case temperature can be maintained above this minimum value, the less energy may be left in debris.

Along with including a case, some embodiments may include one or more radiation windows. Figures 5 illustrates an example of an ICF target 500 configured for directional output in accordance with various embodiments. Figure 5A shows a cross-section of target 500 from a front view, while Figure 5B shows a cross-section of target 500 from a left view. Target 500 includes aspects discussed above with respect to target 300 of Figure 3 and/or target 400 of Figure 4. Target 500 may be utilized with systems such as system 100 and/or 200, for example. For example, target 500 includes case 501, which may be a modified version of case 310. Case 501 may include properties of case 310, as described above. Case 501 includes two radiation windows 502-a and 502-b have been manufactured into case 501, on either side of one axis of target 501. Some embodiments may include more or less radiation windows 502. Radiation windows 502 may also be oriented in different orientations with respect to each other. In one embodiment, one or more radiation windows may be configured around a circumference of the inertial confinement fusion target; such a configuration may in effect create a radiation window band around the circumference of the inertial confinement fusion target.

Although target 500 is shown as otherwise symmetric, radiation windows 502 may be referred to as the left window 502-b and right window 502-a. Target 500 also shows propellant 402, outer shell 406, main fuel 408, inner shell 410, and sparkplug 412, describe above with respect to target 400. Some embodiments, however, may include different structures within case 501 than those shown in target 500. Structures such as propellant 402, outer shell 406, main fuel 408, inner shell 410, and sparkplug 412 merely provide one example of structures that may be found within an ICF target internal to case 510. Other embodiments may include other more general structures as shown in Figure 3. For example, within case 501 may be one or more drive mechanism layers, such as drive mechanism layers 320 as described above with respect to target 300, and an inner target, such as inner target 330 as described above with respect to target 300.

Radiation windows 502 each include a region where the radial thickness of case 501 has been decreased with respect to other portions of case 501. The thickness of case 501 that is part of radiation window 502 may be decreased with respect to other portions of case 501 to different extents in different embodiments. Merely by way of example, in a specific embodiment, case 501 may have radiation windows 402 that may be circular with a radius of approximately 0.2 cm, where the radial case thickness may be approximately 0.015 cm for radiation window 402. In some embodiments, a remainder of case 501 may be increased. In the specific embodiment, the remainder of case 501 may be approximately 0.14 cm. Other dimensions for case 501 thickness and radiation window 502 thickness may be utilized in other embodiments.

In operation, a radiation Marshak wave may be produced by burning fuel within case 401 that penetrates radiation windows 402 first, before breaking through the rest of case 501. At this point, radiation windows 502 can emit black-body radiation at the window temperature, while the rest of case 501's surface is still cool. The radiation power through each radiation window 502 may be approximately 1 GJ/ns for the specific embodiment, for example. Radiation windows 502 may continue to strongly radiate until sufficient energy has been emitted to cool the interior of target 500. In the specific embodiment for example, the interior temperature of target 500 may cool to a temperature of approximately 0.5 kev. This may occur in approximately 10 ns.

Some embodiments may thus produce directional radiation output. In the specific embodiment of target 500 for example, approximately 90% of the radiation energy may be emitted in two lobes on opposite sides of target 500 with only approximately 10% of the radiation energy directed above, below, in front and behind it.

Directional radiation output may allow for the use of non-spherical target or reactor chamber geometries, by controlling where the radiation energy is sent. For examples, this means that the reactor chamber could be cylindrical. Merely by way of example, for a total surface area of $2 \times 10^8$ cm$^2$, and with a length of 100 m, a cylindrical chamber could have a radius of less than 10 m. A cylindrical reactor chamber may be significantly cheaper to build and operate than a sphere of the same surface area.

In some embodiments, the thickness of case 501 in the radiation window region may be just enough for case 501 to meet the needs of the drive mechanism in use. The rest of a case, such as case 501, may be thick enough to set up a good black-body spectrum, and thick enough so that it is only penetrated by the radiation Marshak wave once the radiation windows have radiated the desired fraction of energy directionally. Determining the fraction of case 501 total surface area used as radiation windows may involve a compromise between the rate of radiation emission, and the degree with which the directional lobes are focused.

Some embodiments such as target 500 of Figure 5 may utilize radiation windows 502 that may be replaced by a low-density and/or low-Z material, or in general, a material that is less dense than the material utilized for the rest of case 501, and/or optically-thin compared to the material utilized for the rest of case 501. In one embodiment, the low density material may include beryllium. Some embodiments may include a high-Z layer deposited on the inside surface of the low density material. The high-Z layer may be just thick enough to prevent radiation from escaping until the implosion has causally separated from other structures of the target, such as outer shell 406 and propellant 402. This may be done in order to minimize asymmetry that might result from the different density of the window material. Radiation windows that utilize low-density and/or low-Z materials, such beryllium, may expand outward faster than case 501, due to their lower density than case 501 material, providing underdense channels through which radiation can stream out of a hohlraum formed by case 501.

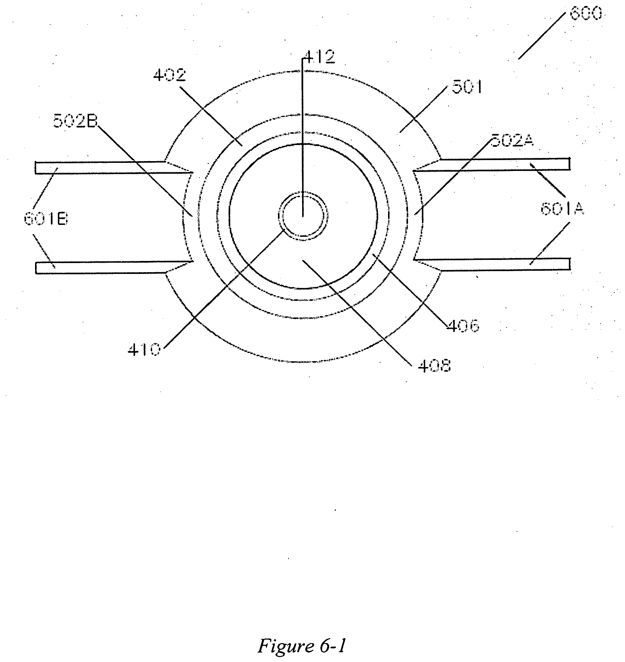

Figure 6 illustrates another example of an ICF target 600 configured for directional output in accordance with various embodiments. Target 600 includes aspects already described above with respect to target 300 of Figure 3, target 400 of Figure 4, and/or target 500 of Figure 5. Target 600 includes cylindrical collimators 601-a and 601-b that can be added or coupled around radiation windows 502, such as 502-a and/or 502-b. In some embodiments, collimators 602 may be configured into different shapes including, but not limited to, conical shapes. Collimators 602 may be utilized in order to focus the directional radiation lobes into a smaller solid angle. Some embodiments may utilize a number of radiation windows, collimators, and output directions other than two.

It is possible to construct variations of target 400, 500, and/or 600 that utilize drive mechanisms other than laser-driven propellant drive mechanism, x-ray-driven propellant drive mechanism, and/or spherical hohlraum drive mechanism, as well as embodiments that utilize different configurations of fuel inside case 310 and/or 501.

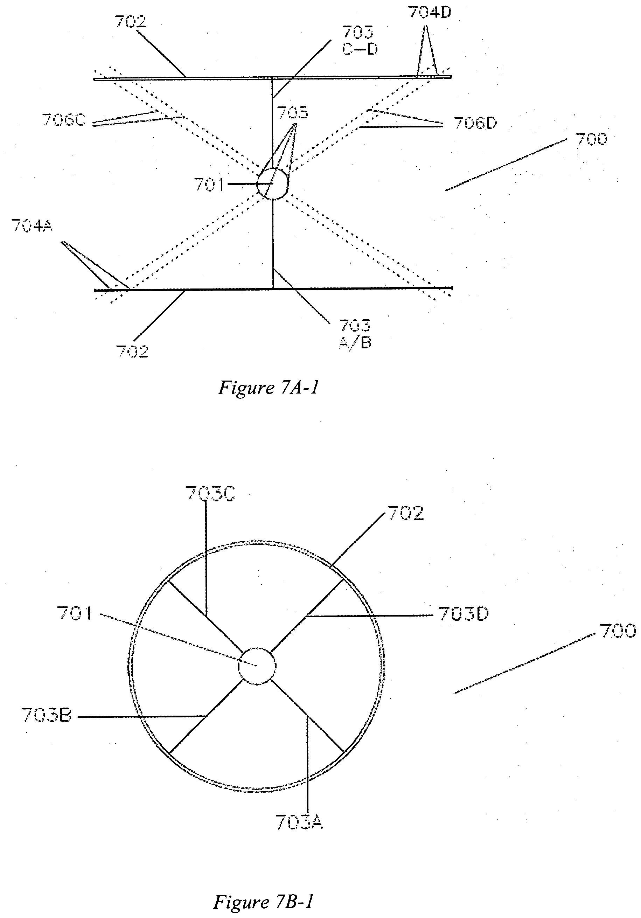

Figures 7 illustrate an output-directing device 700 for an ICF target, configured to direct output of target debris and/or radiation in certain directions from the target in accordance with various embodiments. Figure 7A shows a front cross-sectional view of device 700, while Figure 7B shows a side cross-sectional view of device 700. Device 700 includes ICF target 701. Target 701 may include a wide variety of configurations. In general, target 701 may include an outer case made of a medium-Z and/or high-Z material and a fuel along with possible other structures located interior to the case. Merely by way of example, target 300 of Figure 3 and/or target 400 of Figure 4 provide examples of a target that may be utilized as part of ICF device 700 for ICF target 701.

Target 701 is surrounded at least in part by enclosure element 702 as part of device 700 Enclosure element 702 in this embodiment is configured as a cylindrical sleeve. Some embodiments may include multiple enclosure elements 702. For example, some embodiments may include one or more plates, disks, hemispheres, and/or other elements that may be utilized to partially enclose target 701. In the example shown in Figures 7, cylindrical sleeve 702, or enclosure elements in general, may be made from numerous different materials including medium-Z and/or high-Z materials. In a specific embodiment of device 700, cylindrical sleeve 702 may be made from tungsten. In some embodiments, enclosure element 702 may include a mixture of medium-Z and/or high-Z elements in addition to tungsten so as to have a high radiation opacity across a desired range of radiation frequencies. Sleeve 702 may be configured with different thicknesses, lengths, and radiuses. Merely by way of example, in the specific embodiment, sleeve 702 may have a thickness of approximately 0.05 cm, a radius of approximately 3 cm, and a length of approximately 10 cm. Other embodiments of sleeve 702 may have different dimensions that may depend upon the configuration of target 701 and/or the system, such as system 100 and/or 200, in which device 700 may be utilized. Target 701 may be centered in sleeve 702, or with respect to one or more enclosure elements 702, in a variety of ways. For example, one or more stalks, such as stalks 703-a, 703-b, 703-c, and/or 703-d may be utilized. While Figure 7B shows four stalks 703, other embodiments may include more or less stalks 703. In the specific embodiment, stalks 703 may be made from tungsten or some other medium-Z and/or high-Z material. Beam channels 704 may be manufactured into sleeve 701, or other enclosure elements in general. Figure 7A shows four beam channels 704-a, 704-b, 704-c, and 704-d, however, other embodiments may include more or less beam channels. In some examples, beam channels 704 may be circular in shape, though other shapes may be utilized. Beam channels 704 may be located such that beam paths 706 may align with beam channels 704 that may be fabricated in target 701, such as through a case or other elements of such a target.

As discussed above, some targets that include a case may emit black-body radiation from the outside surface of case after a burn-driven radiation Marshak wave has penetrated the case. In one example of this process with respect to the specific embodiment of target 700, the Marshak wave may penetrate a case approximately 38 ns after an energy beam, such as a laser beam, was first fired at the target. Merely by way of example, calculations may show that high pressures in the target may have accelerated the case to a velocity of $2 \times 10^7$ cm/s, and the inner target materials to a velocity of $1 \times 10^7$ cm/s in some examples. In this example, the burn has largely ceased, and debris may be accelerated further even as radiation continues to stream out of case. For example, as discussed with respect to targets discuss above and in conventional ICF targets in general, the debris field may expand roughly spherically and impact the target chamber wall.

Embodiments that include an enclosure element, such as element 702, may utilize the black-body radiation field emitted by a target case to ablate the inner surface of the enclosure element. In some situations, first just the surface adjacent to target 701 may be ablated, and then more distant parts may be ablated.

Merely by way of example, with respect to the specific embodiment, it may calculated the vaporized, ablated tungsten alloy coming off the sleeve 702 surface travels inward at approximately $5 \times 10^6$ cm/s in some situations. The radial momentum of the tungsten vapor may be enough to counter a significant fraction of the outward radial momentum of the expanding debris field, and so the kinetic energy of the debris moving radially may be transformed into internal energy, then radiation. This effect may be seen in other embodiments in general.

With respect to the specific embodiment, the tungsten vapor and unablated sleeve 702 surface may be configured to be reflective to radiation, so the radiation emitted by the debris from target 701 may be channeled down the axis of sleeve 702 along with a jet of axially-moving debris. Other embodiments may also channel debris along one or more axis of the enclosure elements in general.

Some embodiments may be used in a cylindrical reactor chamber, directing most of the damaging debris and radiation down to the ends of the cylinder, while preserving the walls (and potentially laser optics) nearest to the target itself. Other chamber configurations may also be utilized including, but not limited to, a disk-shaped chamber.

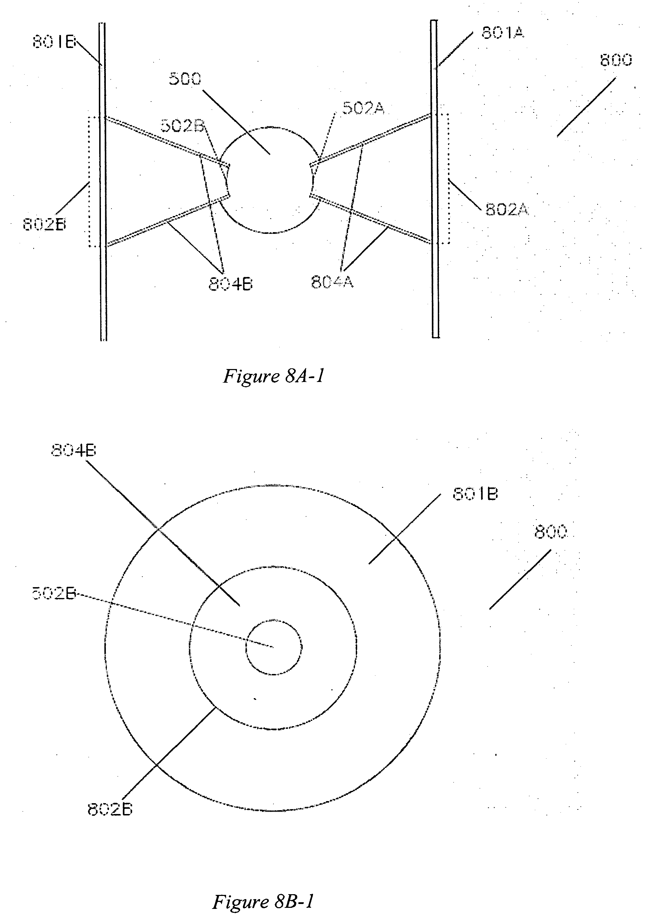

Figures 8 illustrates another output directing device 800 for an ICF target, configured to direct output of target debris and/or radiation from the target in accordance with various embodiments. Device 800 may include a target such as target 500 of Figure 5, though other targets may be utilized. The target, such as target 500, may be centered inside a enclosure elements 801-a and 801-b. In one embodiment, enclosure elements 801 may include circular disks. In a specific embodiment of target 800, enclosure elements 801 may be made from tungsten, though other medium-Z and/or high-Z materials may be utilized in some embodiments. Enclosure elements 801 may be separated from each other. In the specific embodiment, enclosure elements 801-a and 801-b are approximately 6 cm apart, with radius 3 cm and each has a thickness of approximately 0.05 cm. Radiation windows 502-a and 502-b, which may be physical and/or optically thick windows, in target 500 may be aligned with corresponding openings, which may be holes, 802-a and 802-b in enclosure elements 801-a and 801-b respective. Openings 802 may be centered in enclosure elements 801. Openings 802 may be wider or have a greater radius than radiation windows 502 in some case. In the selected embodiment, openings 802 may be configured as a circular hole with a radius of approximately 1 cm hole. Conical, hollow radiation channels collimators 804-a and 804-b may connect radiation windows 502-a and 502-b with openings 802-a and 802-b respectively. In the specific embodiment, collimators 804 may be fabricated from a medium-Z and/or high-Z material. In the specific embodiment, collimators 804 may be made from tungsten and have a thickness of approximately 0.05 cm. The radius of collimators 804 may vary linearly from radiation windows 502 to opening 802. In the specific embodiment, collimators 804 vary linearly from approximately 0.2 cm at radiation windows 502-a or 502-b to approximately 1 cm at openings 802-a or 802-b. In some embodiments, additional small openings may are manufactured through enclosure elements 801-a and/or 802-b, aligned with beam channels in case 500. Some embodiments may include more or less elements such as enclosure elements 801 and/or collimators 804.

In operation, a target, such as target 500, may be imploded, ignite, and burn. When the radiation Marshak wave breaks through radiation windows 502, such as 502-a and/or 502-b, they may begin to radiate black-body radiation. In some situations with embodiments such the specific embodiment of device 800, the radiation may be at approximately 1.5 keV. This radiation streams may through the channel collimators 804, such as 804-a and/or 804-b, and out through openings 802, such as 802-a and/or 802-b in directional lobes. Eventually, the radiation Marshak wave may breaks through the remainder of case 500, which can begin to emit black-body radiation isotropically. This radiation can ablate the inner surface of enclosure elements 801, such as 801-a and/or 801-b. The high-velocity ablated material coming from either side may counter the momentum of the expanding case debris in those directions, producing a disc-shaped debris field that expands perpendicularly to an axis, such as the left-right axis shown in the Figure 8. In this manner, some embodiments may direct the debris and radiation in different directions. This may be advantageous because it can allow the use of different materials in the chamber walls to absorb each type of energy.

Thus, in some embodiments, a case of a target, such as target 701 of Figure 7 and/or target 501 of Figure 8, may be designed to radiate enough energy in order to produce sufficient ablation of the inner surface of an enclosure element, such as enclosure elements 702 of Figure 7 and/or801 of Figure 8, to counteract the radial momentum of the debris field. This process may involve achieving a certain temperature on the outer surface of a case of targets, such as target 501 and/or701, using the considerations discussed above. In some embodiments, it may be preferable to ensure that the thickness of enclosure elements, such as enclosure elements 702 and/or 801, is made no greater than is required to provide enough ablated material in some embodiments. Enclosure elements, such as enclosure elements 702 and/or 801,may become debris as well, and as in some embodiments this debris cannot be made directional, the amount of mass involved may be reduced and/or minimized in some embodiments. The length and/or size of enclosure elements, such as enclosure elements 702 and/or 801, can be made large enough to be sufficient to direct the debris and radiation into the desired solid angle.

In some embodiments, choosing the radius of the enclosure element may involve a balance between several factors. For example, an enclosure element, such as a cylindrical sleeve such as enclosure element 702 of Figure 7, may not made too small, as a small enclosure element may not allow enough time for material ablated off the inner surface of the enclosure element to stop the debris before it impacts the unablated portions of the enclosure element. However, an enclosure element with an overly-large radius may result in a decrease of the radiation flux on the inner surface, possibly below the level needed to produce sufficient ablation. Enclosure elements may be made from material besides tungsten. Materials for enclosure elements, for example, can be chosen so as to adjust these ablation dynamics as needed for a given target.

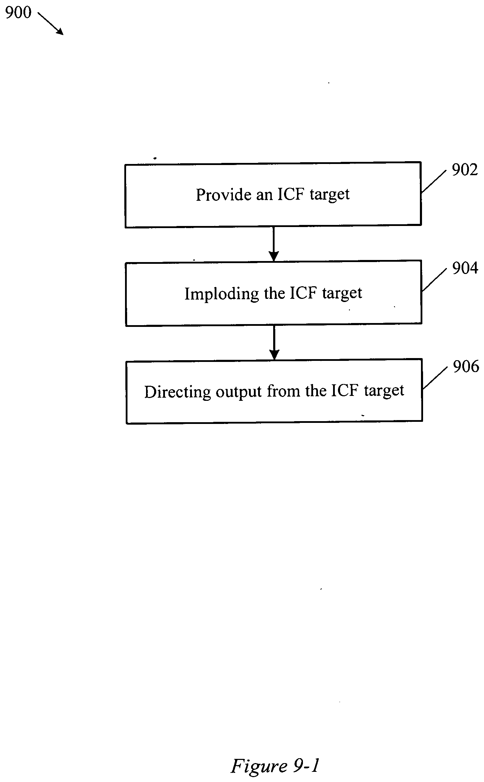

Figure 9 illustrates a flow diagram for a method 900 of directing output from an inertial confinement fusion target in accordance with various embodiments. Method 900 may utilize ICF targets and/or devices such as targets 300, 400, 500, 600, 700, and/or device 800, for example. Method 900 may also be implemented utilizing systems such as system 100 and/or 200. Method 900 may also include aspects already described above with respect to targets 300, 400, 500, 600, 700, and/or device 800, for example. At block 902, an inertial confinement fusion target is provided. At block 904, at least a portion of the inertial confinement fusion target is imploded. At block 906, output from the inertial confinement fusion target is directed utilizing one or more radiation windows of the inertial confinement fusion target and/or one or more enclosure elements partially surrounding the inertial confinement fusion target.

In some embodiments of method 900, the output may includes radiation and/or target debris. Directing output from the inertial confinement window may include ablating an inner surface of the enclosure elements utilizing black-body radiation from the inertial confinement fusion target. Material ablated from the inner surface may interact with the target debris. In some embodiments, the one or more enclosure elements may include a cylindrical sleeve In some embodiments of method 900, the one or more radiation windows may include a portion of the case of the ICF target with a second thickness less than a first thickness of the case. In some embodiments, the one or more radiation windows may include two radiation windows located within symmetrically opposed portions of the case. The one or more radiation windows may include a second material that is optically thinner than the first material of the case in some embodiments.

Various embodiments of the invention describe spherical targets with various shells or layers. Any of these targets and/or any of the related components alone or in combination may be manufactured intentionally non-spherical in order to correct for known asymmetry in the drive mechanism and/or driver energy deposition. Deviation from a perfect sphere in any or all target components due to acceptable manufacturing tolerances and/or manufacturing error may be acceptable and/or tolerated.

Some embodiments discussed above include inertial confinement fusion targets that include a case with channels. Some embodiments that may utilize ion beams may include inertial confinement fusion targets that may be configured to include a case that does not include channels.

## Chambers

The various embodiments are directed toward cylindrical inertial confinement fusion reactor chambers. Such chambers can be designed to contain an ICF target being imploded and capture the resulting energy output from the reaction in the form of neutrons, radiation, and/or debris. Such chambers can generally include a combination of neutron moderating, neutron absorbing, neutron shielding layers, radiation capturing layers, sacrificial layers, shock absorbers, tritium breeding layers, tritium breeders, coolant systems, injection nozzles, inert gas injection nozzles, sputterers, sacrificial coating injection nozzles, beam channels, target supporting mechanism, and/or purge ports, among others. Various Generally speaking, neutron moderating material can be constructed from graphite and may be naturally or artificially doped, combined, alloyed, and/or mixed with neutron absorbing material and/or have a thickness of one or more neutron mean free path lengths (e.g., 0.3 - 1.0 m). Neutron absorbing material may include boron, cadmium, lithium, etc. Radiation tiles or layers can be disposed throughout the chamber to absorb radiation from the reaction. Such cylindrical chambers can be used with both directional and omni-directional targets. For instance, for use with directional targets where neutrons are not directed and radiations and debris are direct along the longitudinal length of the cylinder, a chamber can have neutron moderating and/or absorbing material concentrated near the center of the cylinder, and radiation and debris collecting material can be concentrated in the outer sections of the cylindrical chamber. Various other specific embodiments and configurations are described.

In a typical ICF target, approximately 70-75% of the energy is emitted as high-energy ("fast") neutrons produced by D-T fusion reactions directly, 6-22% as x-ray radiation produced by the high temperatures in the target during fusion burn, and 8-19% as kinetic energy in the debris. The exact distribution of this energy depends on the target configuration. Each of these components can cause damage to the target chamber in several ways.

Neutrons can damage structural materials by producing dislocations in the metal lattice, and transmuting atoms in the reactor wall to different elements. Both damage mechanisms compromise the material's structural integrity, for example, causing swelling, embrittlement, changes in the ductile-brittle transition temperature (DBTT), and introducing impurities in the material's chemical composition. X-ray radiation can damage chamber wall material through heating. Excessive radiation flux can heat the wall material beyond its melting point, or vaporize and ablate off the inner surface of the wall.

The debris produced by the target can produce shocks in the chamber when it impacts the wall material. Shocks propagating through the chamber can producing spalling between material interfaces in the chamber, and disrupt the structural integrity of the chamber materials themselves. Once it has expanded to fill the entire chamber, the hot, low-density gas in the debris field will also exert a static pressure, which the chamber must be able to contain.

The force of material ablating off the wall surface due to x-ray heating may also drive shocks that can produce spalling and material damage.

In addition to remaining intact under these harsh conditions, an ICF reactor chamber may also perform additional duties. It can be used to evacuate or otherwise handle the debris produced by the targets being fired at the rate of several each second, including recovering the unburnt tritium present in the debris. It can provide a mechanism for introducing new targets to the chamber at the rate of several per second, in a manner that allows them to be precisely aligned with the drive mechanism. Additionally, as tritium is a radioactive material that is very scarce in nature and is prohibitively expensive to produce artificially for economic power generation, ICF reactors may contain tritium-breeding materials and recovery systems that use neutrons emitted by the target to produce enough tritium to replace that which is burnt with each shot.

Various schemes have been proposed to produce an ICF power plant reactor which can operate under these conditions. An overview of several reactor concepts can be found in: Gunther Kessler, Gerald L. Kulcinksi, and Robert R. Peterson. "ICF Reactors - Conceptual Design Studies. A Comprehensive Treatise". In: Nuclear Fusion by Inertial Confinement. Ed. by Guillermo Velarde, Yigal Ronen, and Jose M. Martinez- Val. Boca Raton, FL: CRC Press, 1993. Chap. 25. isbn: 0-8493-6926-6. In some target chambers, wall material is vaporized and re- condenses before the next shot. Other designs involve liquid metal flows or jets which surround the target and absorb the energy before it reaches the wall. These so-called "wetted wall" designs can in general handle a higher energy flux and operate with a lower exposed surface area, as well as to soften (shift to lower energy) the neutron spectrum and decrease the neutron flux on the first wall. The use of magnetic fields to shield the walls has also been proposed.

Some versions of the Cascade reactor concept consists of an approximately 5 m diameter conical reactor chamber, rotating at 50 rpm, utilizing a tritium breeding layer of lithium aluminate pellets that are held to the reactor wall by centripetal force. Targets are inserted into the chamber at 5 Hz and burnt, yielding 300 MJ each. The pellets are fed into the reactor by gravity through an insertion port near the axis of rotation, and migrate along the conical reactor wall. Energy recovery occurs through pellets being flung from the outermost part of the rotating chamber into a hopper, which contains heat exchangers to extract the thermal energy and equipment to extract tritium bred in the lithium aluminate pellets.

Conventional ICF targets produce output that is mostly uniform in angular distribution, and so conventional ICF target chambers are designed to contain isotropic output. This means that they are all roughly spherical in shape, or at least not significantly larger in one dimension than another.

All of these concepts are theoretical in nature, as the only actual ICF systems constructed have been experimental research facilities such as NIF, which do not attempt to produce useful amounts of power, achieve high repetition rates, or breed tritium. Actually designing, building and operating a safe, practical, reliable ICF power plant utilizing these concepts will require a long period of costly engineering effort. The neutron fluxes and neutron energies produced by ICF targets are higher than those produced in nuclear fission reactors, and thus outside the range in which significant materials engineering expertise exists. In Michael Moyer. "Fusion's False Dawn". In: Scientific American (2010), Mohamed Abdou, director of the Fusion Science and Technology Center at UCLA, estimates that if work were to begin immediately, it would take 30-75 years of effort on the tritium breeding blanket alone before the issues are understood well enough to begin construction on an actual power plant.

A cylindrical fusion reaction chamber like the one shown in Figure 3-2 (e.g., target chamber 201 in Figure 2) is provided. Chamber 300 can be used to contain a imploding ICF targets and capture the energy released from the reaction.
Chamber 300 can have a generally cylindrical shape with closed ends and/or can have various radii and/or lengths. Chamber 300 includes neutron moderating/absorbing material 305 that can be cylindrical and define the inner part of chamber 300. Neutron moderating/absorbing material 305 can be primarily used for neutron capture from a fusion reaction occurring within chamber 300, recovering energy from the neutrons through moderation, breeding tritium, and/or absorbing neutrons. Neutron moderating/absorbing material 305, for example, can be manufactured of graphite. Because of the long mean free path of neutrons from a fusion reaction, the thickness of neutron moderating/absorbing material 305 can be thick; for example, greater than 1 m thick. Neutron moderating/absorbing material 305 can include coolant channels that carry coolant through neutron moderating/absorbing material 305. This coolant can be used to extract heat from within the chamber.

Chamber 300 can include any number of manifolds 310 for various purposes. Some manifolds 310; for example, can be used to purge chamber 300 to create a vacuum. As another example, some manifolds 310 can be used for coolant delivery and collection. Manifolds 300 can be used for any number of purposes. Chamber 300 can also include beam ports 310. Beam ports 300 can be positioned and/or angled to direct laser energy toward the center of chamber 300. A target secured within chamber 300 using any number of mechanisms. Pole 320 is one example of a mechanism for securing a target. Chamber 300 can include tritium breeding devices. For example, chamber 300 can include channels having lithium, which is used for tritium production when bombarded with neutrons. Thus, the byproducts of fusion of fuel including tritium can be used to produce tritium for future targets.

Chamber 300 can also include various other confinement configurations, wall configurations, port configurations, manifold configurations, etc. In particular, chamber 300 can include any other configuration described herein.

Figure 4-2 is an example of another chamber. Chamber 400 can be generally cylindrically shaped. Chamber 400 includes inner pressure vessel 410 coupled with two outer pressure sections 106L, 106R. For example Figure 5-2 shows some details of the inner sections of pressure vessel 410 and Figure 6-2 shows some details of the outers sections of pressure vessel 410.

Returning to Figure 4-2, outer pressure vessel sections 106L, 106R can be cylindrical sections that are attached to opposite sides of inner pressure vessel 410 by flanges 104L, 104R. Outer pressure vessel sections 106L, 106R can be constructed from various materials, for example, 316 stainless steel. In some embodiments, outer pressure vessel sections 106L, 106R, for example, can have an inner radius of 5 m and a thickness of 10 cm. Various other inner radii and thickness can be used. Hemispherical end caps 116L, 116R can be attached to the ends of outer sections 106L, 106R. End caps 116L, 116 R can be constructed with various materials and made in various sizes. For example, end caps 116L, 116R can be constructed from stainless steel. As another example, end caps 116L, 116R can have a thickness of 10 cm, with a radius of curvature of $\sqrt{5^2 + 25^2} = 24.495$. A neutron shielding layer 117L, 117R can surround outer sections 106L, 106R and end caps 116L, 116R. For example, neutron shielding layer can be made from any material, for example, concrete or doped concrete, and/or can have various thicknesses, for example, a thickness of 1 m.

Radiation absorbing tiles 108 can be layered on the inside surface of the outer pressure vessel sections 106L, 106R. These tiles can have various thicknesses; for example, a thickness of 5 cm. In some configurations, radiation absorbing titles can be separated from the pressure vessel wall by air gap 128. Air gap 128, for example, can be about 10 cm. Radiation absorbing tiles can be constructed using any type of radiation absorbing material, such as graphite.

In some examples, air gaps are described. Any of these air gaps may or may not include air. For example, when a chamber is not evacuated air the air gap contains air.
When the chamber is an evacuated chamber air gaps do not contain air.

Central cooling channels 112 run longitudinally through the neutron-absorbing blocks 102. Central cooling channels 112 can be constructed from a low activation material, for example, zirconium alloy. Ring-shaped input coolant manifold 130 and output coolant manifold 132 can be included on the outside of flanges 104L, 104R provide for inflow and outflow of coolant, such as water. Outer coolant channels 114 can run longitudinally on the outside of outer graphite layer 108. Ring shaped outer coolant input manifolds 134L, 134R can be used on the outside of the flanges 104L, 104R and can provide inflow of coolant into the outer channels 114, which are routed to the outer coolant output manifolds 136L/R on the outside of hemispheres 116L, 116R.

Any or all the coolant manifolds can be connected to external pumps and a heat exchanger system. Two neutron-absorbing rings 109L, 109R can be included to ensure there is sufficient shielding of various structural materials. For example, 1 m of graphite shielding can be used near flanges 104L, 104R and coolant manifolds 130 and 132 at the interface between the inner pressure vessel section 100 and outer pressure vessel sections 106L, 106R.

Beam ports 110 are formed within outer pressure vessel wall 106L, 106R. These beam ports can be bored through the outer pressure vessel walls. Beam ports 110 can be disposed on both sides of inner pressure vessel 410. Beam ports 110 can also be disposed around the circumference of outer wall 106L, 106R separated by 90° so that four beam ports are found around the vessel. In other examples 2 beam ports separated by 180° can be used. Beam ports 110 can be cylindrical channels with a diameter of about 10 cm and can be formed through the outer wall 106L, 106R and/or radiation-absorbing tiles 108. Beam port channels are angled such that their major axes intersect at or near the center of the inner pressure vessel 410. Beam ports 110 can be connected to the output stage of a drive mechanism for the ICF target. Drive mechanism can include a laser or particle beam.

Figure 5-2 shows partial end view cross-section of chamber wall 500 (e.g., inner pressure vessel 410 or chamber 300). These walls can include an outer layer 510 that defines the exterior of the chamber or wall. Outer layer 510 can be made of a strong structural material such as 316 stainless steel.

Neutron moderating/absorbing layer 515 can be embedded within wall 500, disposed against the inner radius of outer layer 510, or separated by another layer from wall 500. Neutron moderating/absorbing layer 515 can be a material used to absorb and/or moderate neutrons from a fusion reaction occurring within chamber 400. Neutron moderating/absorbing layer 515 can have a thickness of 1 m. Neutron moderating/absorbing layer 515 can be made of a neutron moderating material, such as graphite and/or neutron absorbing material that has a high capture cross section (e.g., $^6$Li or boron). Neutron moderating/absorbing layer 515 can be attached to the inner surface of wall 500, separated by air gap 520. Air gap 520, for example, can be about 2 cm thick.

Central coolant channels 112 can be bored through neutron moderating/absorbing layer 515. In some configurations, these channels can be located in the outermost region of neutron moderating/absorbing layer 515. Each channel 112 can be constructed from a zirconium alloy tube with an inner radius of 2 cm, and an outer radius of 2.5 cm. Channels 112 can be separated by approximately 15 cm from each other. Neutron moderating/absorbing layer 515 can be mounted to a 1 cm thick cylindrical metal spall shield 502. Spall shield 502 can be suspended inside inner pressure vessel 410 and within air gap 126 by shock-absorbing mounts 400.

Figure 6-2 illustrates a cross-section of another chamber wall (e.g., outer wall 106L, 106R). The figure also shows various geometries for disposing radiation-absorbing tiles 108 and coolant channel geometry. Tiles 108 can be mounted to a cylindrical metal heat spreader plate 505. In some examples, tiles 108 can be 5 cm thick. In some examples, heat spreader plate 505 can be 1 cm thick.

Outer coolant channels 114 run on the outside of the spreader plate 505. These channels, for example, can have an inner radius of 2 cm and/or an outer radius of 2.5 cm. Channels 114 can have flat surfaces where they contact spreader plate 505. There can be approximately 1000 channels 114 around the circumference of the spreader plate 505. Spreader plate 505 can be suspended inside air gap 128 to outer pressure vessel section 106L, 106R by shock-absorbing mounts 302.

Evacuation pumps 138 can be located at the ends of outer pressure vessel wall 106L, 106R. Circular entrance port 140 can be manufactured through neutron-absorbing blocks 102 and can allow target 122 to be suspended in the center of the reactor at the end of a target insertion rod 142. Entrance port 140 can have a radius of 5 cm at the bottom of the inner pressure vessel section 100. Central coolant channels 112 can be routed around the port as it passes through neutron absorbing layer 515.

An example of an insertion rod (e.g., insertion rod 142 shown in Figure 4-2) is illustrated in Figure 7-2. Insertion rod 705 can include a neutron-absorbing cylinder 400 that can be made of the same material as neutron absorbing layer 515. Insertion rod 705, for example, can be 1 m thick and have a 5 cm radius. Inner rod 402 can be mounted to cylinder 400, extending into the interior of the target chamber. Inner rod 402, for example, can extend about 5 m into target chamber, can have about a 1 cm radius, and/or can be made from zirconium alloy or other materials. Plastic sacrificial washer 406 can be disposed on top of rod 402. Sacrificial washer 406, for example, can have a 1 cm radius and/or can be 1 cm thick. Target 122 can be mounted on top of sacrificial washer 406. Shock absorber 404 can be situated below cylinder 400

The embodiment discussed in Figure 4-2 is designed to contain a target with a total yield of 100 GJ. The energy output can be divided roughly as 20% in black-body radiation at 5 kev, 30% in debris, and 40% in neutrons. The neutron output from the ICF target can be isotropic. And the debris and radiation output is directed in two lobes down the long axis of the cylinder.

In operation, target 122 can be attached with sacrificial washer 406 and mounted on top of rod 402. Port 140 is opened, and entire insertion rod 705 is inserted into the chamber. Port 140 is closed, and pumps 138 evacuate the chamber to the vacuum level needed for adequate drive beam propagation. At this point, the drive system may perform any final alignment necessary to correct for errors in the positioning of the target.

The drive system can then be fired. In doing so sufficient energy can be delivered to target 122 to ignite it. Neutrons are the first output products from the fusion reaction within target 122 to reach the inner wall of the reactor. The neutron moderating/absorbing layer 515 can encompass about 90% of the solid angle visible to target 122. Moreover neutron moderating/absorbing layer 515 can be sufficiently thick to stop neutrons up to 14 MeV before they can reach the structural material in inner pressure vessel wall 100. Energy deposited from neutrons collisions produces a temperature increase in neutron moderating/absorbing layer 515. For example, this layer can be cooled by coolant flowing through central cooling channels 112, and neutron moderating/absorbing layer 515 can operate at a temperature of approximately 500 K, with a temperature rise per shot of approximately 50 K. The coolant in central cooling channels 112, for example, can run at about 400 K, carrying approximately 800 MW of power.

Neutrons that are emitted at an angle may not interact with neutron moderating/absorbing layer 515 or shield rings 109L, 109R. But these neutrons may pass through the radiation absorption tiles 108, which may be a large distance (e.g. 12 m) from the ICF target than the neutron moderating/absorbing layer 515, resulting in a lower average neutron power (e.g., lowering the average neutron power to 380W/cm$^2$/s). While the 5 cm of radiation-absorbing tiles 108 are not sufficient to stop these neutrons, the neutron flux here can be well below acceptable limits on structural materials. The neutron-shielding concrete 117L, 117R outside the outer pressure vessel sections 106L, 106R prevents these neutrons from escaping the reactor.

Radiation is another output product of the target 122 to reach material on the inside of the reactor walls. Blackbody radiation at 5 keV will be absorbed in the first few millimeters of neutron moderating/absorbing layer 515 and radiation-absorbing tiles 108, allowing a maximum radiation fluence of approximately 1000 J/cm$^2$ (at normal incidence) before vaporizing the graphite they are made from. Assuming target 122 produces radiation output at 5 keV, in an angular distribution such that each surface is subject to its maximum tolerable fluence (which can be corrected for non-normal incidence for surfaces distant from the target 122), the 20 GJ of radiation output can be contained without vaporizing the graphite.

At 1000 J/cm$^2$ of radiation flux, the surface of the graphite may reach a peak of approximately 2500 K with every pulse. This energy will diffuse through graphite tiles 108, and reach spreader plate 505, where it will then be carried away in the outer coolant channels 114. The radiation- absorbing tiles operate at an average temperature of 500 K, with a coolant temperature of approximately 400 K.

Finally, the expanding debris field will reach the graphite blocks 102 and tiles 108. Fast-moving debris that delivers an impulse on a faster timescale than the sound speed in the graphite can drive shocks into the graphite which may damage the cooling channels or the graphite itself. Spall shield 202 and/or spreader plate 505 can help prevent spallation as shocks exit the graphite, while air gaps 126 and/or 128 and shock absorbing mounts 505 and 605 isolate the pressure vessel walls from any shocks produced. The directional output of the debris reduces the strength of any shocks that will be produced by directing the debris field away from the near walls, giving the field time to expand, and thus increasing the timescale over which it will deliver its impulse. It can be beneficial for the target to have sufficient directionality in order to subject all surfaces in the reactor to a short-timescale impulse, which is the lower limit at which spallation may occur. In some examples, this may require directing approximately 75% of the debris output away from the near walls.

Once the debris field has expanded to fill the entire chamber, it can exert a static pressure on the pressure vessel walls of approximately 60 bar. The pressure vessel sections should be designed with enough strength to safely contain this pressure. The hot debris field will radiate energy into the graphite layers and reactor walls, which can be then transported away by the coolant channels.

Insertion rod 705 is retracted and the now destroyed target 122 and sacrificial washer 406 are replaced, as vacuum pumps evacuate the chamber in preparation for the next shot. By utilizing targets that can produce directional output, the reactor described in this embodiment can contain targets with higher yields than conventional reactors, without the massive increase in size that would be required of a conventionally-shaped, approximately spherical reactor. The ability to economically contain targets with high yield, for example, 100 GJ and above, can be beneficial for several reasons.

First, targets with high yield may require a lower repetition rate in order to produce the same power from targets with the same gain. A gigawatt plant utilizing 100 GJ targets (e.g., using the chamber and/or targets previously described) would need to shoot a target just once every hundred seconds for a repetition rate of 0.01 Hz. In contrast, other conventional ICF reactors have a repetition rate of about 5 Hz. The delay of 100 seconds between shots, as opposed to a split second, greatly reduces the demands on the target insertion and alignment system, the drive mechanism, the debris evacuation pumps, and other systems.

Second, targets with high yield allow the use of larger targets. The higher $\rho r$ of larger targets generally translates into higher burn fractions and higher gains, and allows for lower overall convergences. High gains decrease the cost of power, as they correspond to an increase in energy produced by fusion burn for a constant energy delivered by the driver. The high $\rho r$ in these targets can also soften the neutron spectrum and decrease the neutron flux they produce, decreasing the amount of neutron damage to the reactor materials.

Third, the ability to contain large targets with high yield allows the use of targets that rely on fuels other than deuterium-tritium to produce substantial fractions of their yield, such as a lithium deuteride burning target. The high $\rho r$ required to produce acceptable burn fractions in these advanced fuels requires the use of large targets, which cannot be contained in a conventional ICF reactor.

These targets can be designed to breed tritium inside the targets themselves, decreasing or totally eliminating the need to include a complex tritium breeding scheme in the reactor design.

Fourth, the use of graphite shielding protecting the structural reactor wall allows the neutron fluence and spectrum on the reactor wall to be reduced to arbitrarily low levels. Together, all of these advantages translate into a simpler, more economical reactor design than conventional ICF approaches.

Many aspects of the embodiment discussed above can be altered. It can be scaled up to handle targets with higher yields (or targets that do not produce their yield in the optimal directional as described above), or scaled down to handle targets with lower yields. Multiple variations of the cooling channel type and geometry can be used, as well as the possibility of using coolants other than water. Various configurations of vacuum pumps and or target insertion mechanisms may be used.

The inner pressure vessel 410 can be lengthened in order to increase the fraction of neutrons captured in neutron moderating/absorbing layer 515. Outer pressure vessel sections 106L, 106R can be lengthened in order to increase the surface area available for radiation absorption. The materials mentioned are merely specific examples of the materials one might choose in constructing examples. Graphite was chosen for the neutron-moderating blocks 102 because of its favorable thermal conduction and low neutron activation cross-section, but other materials are suitable as well. Graphite was also chosen for radiation-absorbing tiles 108 because it has a low opacity to high-energy radiation, allowing radiation to penetrate deeper into the material and distribute the resulting temperature increase over a larger area. A zirconium alloy can be chosen for materials that experience a significant neutron flux (e.g., the central cooling channels 112 and/or target positioning rod 142), as it has a low rate of neutron activation. Metal (e.g. a zirconium alloy) plates or structures inside can be included within the neutron moderating/absorbing layer 515 so as to increase the rate of thermal conduction into the central cooling channels 112. Various other materials may be used without limitation.

In some examples a reactor can be used to contain targets with a higher fraction of energy output in debris, or a poorer degree of debris directionality, such that the neutron-absorbing blocks near the target will be subject to a higher impulse over a short timescale than the approximate limit of 500 taps. Such a reactor can be similar to the reactor described in other examples, with a cylindrical debris silencer layer 500 added on the inside surface of neutron-absorbing blocks 102, as illustrated in Figure 6-2.

Debris silencer layer, for example, can be made from the structure illustrated in Figure 9-2. It can include 5 overlapping screens 610 of metallic wires. These screens, for example, can be manufactured from zirconium alloy, can have a 1 mm in diameter, and/or can be spaced 8 mm apart. The screens can be aligned with second layer 610B, which is rotated 45 degrees from first (innermost) layer 600 A, the third layer 6IOC is rotated 90 degrees from first layer 610A, the fourth layer 610D is rotated 135 degrees from first layer 610A, and fifth layer 610E is aligned with the first layer 610A, but offset by 4 mm in one direction. Turbulent flow between the screen layers can dissipate kinetic energy in the expanding debris, transforming it into internal energy and thereby increasing the timescale over which the debris impulse can be delivered to the near walls.

The screens can be manufactured with zirconium alloy, which can withstand high neutron flux. Other materials can be used. Variations of this example may utilize this silencer layer in other areas of the reactor chamber, or utilize screens with different wire dimensions and/or spacings, fewer or more screens, or other shock-suppression means besides overlapping screens. Other silencer layer structures are possible.

Figure 8-2 shows a reactor that have poor radiation directionality. That is, they leak a significant fraction of their output as isotropic radiation. In some examples, can be similar to other examples, (e.g., the reactor shown in Figure 3-2 or Figure 4-2), but with a sacrificial layer that is disposed within the inner wall of the chamber. This sacrificial layer can be a light metal, such as aluminum. In some examples, the sacrificial layer can be sputtered onto the walls by a series of retractable coaters 800. This metal is intended to be ablated off the walls with each shot, thereby allowing a higher wall fluence and permitting the use of targets with poor radiation directionality without requiring an undesirably large chamber radius. For example, coaters 800 can be arranged in groups of 4 coaters, 90° apart, with each group separated by 2 m lengthwise.

The sacrificial layer may only need to be thick enough to protect the graphite surface on the near walls from ablation. However, it may be useful to keep the wall fluence below levels that will generate an ablative-driven shock, which will damage the structural wall material in the same manner as debris impact.

The sacrificial layer can also allow the use of targets that produce black-body radiation at less than 5 keV, without increasing the size of the reactor chamber. Sacrificial layer does not need to be uniformly deposited over the entire inner surface of the chamber. For example, coaters 700 can be arranged in such a manner as to deposit the sacrificial layer 702 only in regions where the wall fluence is expected to be higher, or the radiation temperature is expected to be lower, than graphite can withstand. This technique can be used to correct for targets with a largely optimal radiation spectrum, but with predictable, localized "hot spots" of higher radiation fluence than is desired.

In some examples, a reactor chamber can include gas injection nozzles positioned throughout outer pressure vessel. In such examples, the reactor chamber can be similar to any of the other chambers described herein with gas injection nozzles as shown in Figure 11-2. In particular, gas injection nozzles 800 can be located within outer pressure sections 106L, 106R. Before each target is fired, these nozzles can inject an inert gas into the chamber, such as xenon, argon, or helium. The gas can fill outer pressure sections 106L, 106R with the gas at a small fraction of atmospheric density. The gas may be injected in sufficient volume to fill the outer sections 106L, 106R to the desired density before significant gas reaches the beam propagation paths. The gas density is chosen so as to slow the debris and absorb radiation output, heating the gas and causing it to re-radiate the absorbed energy on a longer timescale. This allows a chamber of a given volume to contain targets of a higher yield and/or fraction of output in debris and radiation than they would otherwise, by decreasing the instantaneous debris and radiation fluence on the wall.

In some examples, the reactor chamber can be filled with helium, or another inert gas, at approximately 1/4 to ½ atmospheric density. This gas can be used, for example, with a 100 G J target that produces 90% of its yield in directional radiation. In operation, the target is ignited, and its radiation output is entirely absorbed over the length of the chamber in the helium. This heats the helium to a high temperature. The energy in the helium can be recovered as it radiates and conducts energy into the walls, or by running the high-pressure helium gas through a turbine.

Some classes of targets produce a lower amount of energy in neutrons than other targets. If such targets are used within a chamber, then the size of the neutron-absorbing blocks 102 can be decreased and/or the number of central coolant channels 112 decreased to account for the decreased neutron flux.

It is possible to scale these embodiment to handle targets with yields significantly greater than 100 GJ. For instance, a reactor following approximately the same general configuration as the first embodiment, but with an inner pressure vessel section 100 inner radius of 11m, an outer pressure vessel section radius of 10m, and a total length of all sections of 100m, may contain a target producing approximately 200 GJ in directional prompt radiation output, 400 GJ in isotropic neutron output, and 500 GJ initially in debris, for a total yield of 1 TJ. Dimensions of cooling channels, the thickness of the radiation-absorbing plates 108, and other details may need to be adjusted in order to make such a chamber perform optimally.

Another example can include the same reactor configurations described in conjunction with the other examples, but with the neutron-absorbing blocks 102 replaced with or in conjunction with tritium-breeding material, such as lithium aluminate pellets, lithium titanate blocks, flowing liquid lithium, or any configuration of materials designed for tritium breeding. Such examples can be designed for use with a target that is thick to neutrons, producing 100 GJ of total output with 85% in directional debris, 10% in radiation, and 5% in isotropic quasithermal neutrons. The target debris is presumed to be directed towards the ends of the cylinders, where as in other examples it is slowed by injected gas before impacting the walls, while the quasi-thermal neutrons enter the tritium breeding material inside the inner pressure vessel section 100 and breed tritium.

Conclusion

The specific embodiments presented are intended to be representative examples of how different embodiments might be utilized by one skilled in the art. Generalizations and expressions of preferences were made to assist in understanding how different parameters of the design interact. It is expected that anyone skilled in the art utilizing this disclosure may make use of detailed numerical simulations, as are used in the design of all modern ICF targets, to assist in understanding the trade-offs involved and the behavior of embodiments with differing materials and dimensions.

The design formulas and operational results (yields, gains, timescales, output spectrums, etc.) of the specific embodiments discussed above were determined by hand calculations, and/or the use of a one-dimensional Lagrangian radiation hydrodynamics code utilizing three-temperature radiation diffusion with the Dyson opacity approximation for bound-bound and bound-free transitions, the D-T, D-D, and D-$^3$He fusion reactions, and a Thomas-Fermi equation of state with cold pressure correction. These calculations and results are presented to aid those skilled in the art in understanding the characteristics of the embodiments described, and in understanding the criteria considered useful for designing additional embodiments. It is expected that calculations and simulations involving different physical models and/or approximations may not exactly replicate the results described here, and that the use of more accurate simulations or physical experiments can aid in producing an optimized design.

The term black-body radiation is used to describe a radiation distribution that is qualitatively close to an ideal black-body distribution. In practice, no material is a perfect black-body radiator.

Various embodiments of the invention are described in terms of specific characteristics such as having various shells, radii, layers, mechanisms, lengths, materials, densities, dimensions, etc., that are described by ranges or with specific examples. The characteristics of such embodiments can be scaled outside the ranges provided while preserving the characteristics of the invention and/or without deviating from the scope of the invention. For example, radii may be scaled upwards or downwards, densities may vary, materials may change, yet such changes are within the described embodiments of the invention. Thus, the mention of specific ranges or examples of such characteristics do not constrain, construe, and/or limit the scope of the invention.

While advantages and characteristics of certain embodiments are mentioned, this should not be interpreted as a requirement that all embodiments display these advantages or characteristics. The previous description provides exemplary embodiments only, and is not intended to limit the scope, applicability, or configuration of the disclosure. Rather, the previous description of the exemplary embodiments will provide those skilled in the art with an enabling description for implementing one or more exemplary embodiments. It is understood that various changes may be made in the function and arrangement of elements without departing from the scope of the invention. Several embodiments were described herein, and while various features are ascribed to different embodiments, it should be appreciated that the features described with respect to one embodiment may be incorporated within other embodiments as well. By the same token, however, no single feature or features of any described embodiment should be considered essential to every embodiment of the invention, as other embodiments of the invention may omit such features.

Specific details are given in the previous description to provide a thorough understanding of the embodiments. However, it will be understood by one of ordinary skill in the art that the embodiments may be practiced without these specific details. Also, it is noted that individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process may be terminated when its operations are completed, but could have also included additional steps or operations not discussed or included in a figure. Furthermore, not all operations in any particularly described process may occur in all embodiments. A process may correspond to a method, a function, a procedure, a subroutine, a subprogram, etc. When a process corresponds to a function, its termination corresponds to a return of the function to the calling function or the main function.

Furthermore, embodiments may be implemented, at least in part, either manually or automatically. Manual or automatic implementations may be executed, or at least assisted, through the use of machines, hardware, software, firmware, middleware, microcode, hardware description languages, or any combination thereof. When implemented in software, firmware, middleware or microcode, the program code or code segments to perform the necessary tasks may be stored in a machine readable medium. A processor(s) may perform the necessary tasks. While detailed descriptions of one or more embodiments have been give above, various alternatives, modifications, and equivalents will be apparent to those skilled in the art without varying from the scope of the invention. Moreover, except where clearly inappropriate or otherwise expressly noted, it should be assumed that the features, devices, and/or components of different embodiments may be substituted and/or combined. Thus, the above description should not be taken as limiting the scope of the invention, which is in any case defined by the appended claims.


**Claims**

1.   An inertial confinement fusion target (500) providing directional output, the target comprising:

   a fuel (408);
   a spherical case (501) defining a cavity, the spherical case (501) comprising:

      a first material comprising at least a medium-Z material or a high-Z material; and
      one or more radiation windows (502); and
      wherein the fuel (408) is disposed within the cavity of the spherical case (501).

2.   The inertial confinement fusion target (500) of claim 1, wherein the one or more radiation windows (501) comprises a portion of the spherical case (501) with a second thickness less than a first thickness of the spherical case (501).

3.   The inertial confinement fusion target (500) of claim 1, wherein the one or more radiation windows (502) comprises two radiation windows (502) located within symmetrically opposed portions of the spherical case (501).

4.   The inertial confinement fusion target (500) of claim 1, wherein the one or more radiation windows (502) comprises a second material that is optically thinner than the first material of the spherical case (501).

5.   The inertial confinement fusion target (500) of claim 1, further comprising one or more collimators (601), each collimator (601) coupled with one of the respective radiation windows (502).

6. The inertial confinement fusion target (500) of claim 5, wherein the one or more collimators (601) comprise one or more cone shaped or cylindrical shaped collimators (601).

7. The inertial confinement fusion target (500) of claim 5, further comprising one or more enclosure elements (801A, 801B), each enclosure element (801A, 801B) defining an opening (802) and each collimator (601) coupled with a portion of a respective enclosure element (801A, 801B) surrounding a respective opening (802).

8. The inertial confinement fusion target (500) of claim 1, wherein the one more or more radiation windows (502) define a circular region of the spherical case (501).

9. The inertial confinement fusion target (500) of claim 1, further comprising:

   one or more enclosure elements (801A, 801B) partially enclosing the inertial confinement fusion target (500).

10. The inertial confinement fusion target (500) of claim 9, wherein the one or more enclosure elements (801) comprises a cylindrical sleeve.

11. A method of directing output from an inertial confinement fusion target (500), the method comprising:

   providing the inertial confinement fusion target (500);
   imploding at least portion of the inertial confinement fusion target (500);
   directing output from the inertial confinement fusion target (500) utilizing at least one or more radiation windows (502) in a spherical case (501) of the inertial confinement fusion target (500) or one or more enclosure elements (801A, 801B) partially surrounding the inertial confinement fusion target (500).

12. The method of claim 11, wherein directing output from the inertial confinement window (502) further comprises ablating an inner surface of the one or more enclosure elements (801A, 801B) utilizing black-body radiation from the inertial confinement fusion target (500).

13. The method of claim 11, wherein the output comprises target debris and a material ablated from the inner surface of the enclosure elements (801A, 801B) interacts with the target debris.

14. The method of claim 11, wherein the one or more radiation windows (502) comprises a portion of the spherical case (501) with a second thickness less than a first thickness of the case spherical (501).

15. The method of claim 11, wherein the one or more radiation windows (502) comprises two radiation windows (502) located within symmetrically opposed portions of the spherical case (501).

16. The method of claim 11, wherein the one or more radiation windows (502) comprises a second material that is optically thinner than the first material of the spherical case (501).

17. The method of claim 11, wherein the one or more enclosure elements (801A, 801B) comprises a cylindrical sleeve


**Patentansprüche**

1. Trägheitseinschlussfusionsziel (500), das eine gerichtete Ausgabe vorsieht, wobei das Ziel aufweist:

   einen Kraftstoff (408),
   ein sphärisches Gehäuse (501), das eine Aushöhlung aufweist, wobei das sphärische Gehäuse (501) aufweist:

   ein erstes Material, das zumindest ein Mittleres-Z-Material oder ein Hohes-Z-Material aufweist, und
   ein oder mehrere Strahlungsfenster (502), und
   wobei der Kraftstoff (408) innerhalb der Aushöhlung des sphärischen Gehäuses (501) angeordnet ist.

2. Trägheitseinschlussfusionsziel (500) nach Anspruch 1, wobei das eine Strahlungsfenster (501) oder die mehreren von diesen einen Abschnitt des sphärischen Gehäuses (501) mit einer zweiten Dicke, die geringer als eine erste Dicke des sphärischen Gehäuses (501) ist, aufweisen.

3. Trägheitseinschlussfusionsziel (500) nach Anspruch 1, wobei das eine Strahlungsfenster (502) oder die mehreren von diesen zwei Strahlungsfenster (502) aufweisen, die innerhalb von symmetrisch entgegengesetzten Abschnitten des sphärischen Gehäuses (501) lokalisiert sind.

4. Trägheitseinschlussfusionsziel (500) nach Anspruch 1, wobei das eine Strahlungsfenster (502) oder die mehreren von diesen ein zweites Material aufweisen, das optisch dünner als das erste Material des sphärischen Gehäuses (501) ist.

5. Trägheitseinschlussfusionsziel (500) nach Anspruch 1, das außerdem ein oder mehrere Kollimatoren (601) aufweist, wobei jeder Kollimator (601) mit einem der jeweiligen Strahlungsfenster (502) gekoppelt ist.

6. Trägheitseinschlussfusionsziel (500) nach Anspruch 5, wobei der eine Kollimator (601) oder die mehreren von diesen einen oder mehrere kegelförmige oder zylinderförmige Kollimatoren (601) aufweisen.

7. Trägheitseinschlussfusionsziel (500) nach Anspruch 5, das außerdem ein oder mehrere Einhausungselemente (801A, 801B) aufweist, wobei jedes Einhausungselement (801A, 801B) eine Öffnung (802) definiert, und jeder Kollimator (601), der mit einem Abschnitt eines jeweiligen Einhausungselements (801A, 801B) gekoppelt ist, eine jeweilige Öffnung (802) umgibt.

8. Trägheitseinschlussfusionsziel (500) nach Anspruch 1, wobei das eine Strahlungsfenster (502) oder die mehreren von diesen einen kreisförmigen Bereich des sphärischen Gehäuses (501) definieren.

9. Trägheitseinschlussfusionsziel (500) nach Anspruch 1, das außerdem aufweist:

ein oder mehrere Einhausungselemente (801A, 801B), die teilweise das Trägheitseinschlussfusionsziel (500) einhausen.

10. Trägheitseinschlussfusionsziel (500) nach Anspruch 9, wobei das Einhausungselement (801) oder die mehreren von diesen eine zylindrische Hülse aufweisen.

11. Verfahren zum Richten einer Ausgabe von einem Trägheitseinschlussfusionsziel (500), wobei das Verfahren aufweist:

Vorsehen des Trägheitseinschlussfusionsziels (500),
Implodieren zumindest eines Abschnitts des Trägheitseinschlussfusionsziel (500),
Richten der Ausgabe von dem Trägheitseinschlussfusionsziel (500) unter Verwendung von zumindest einem Strahlungsfenster (502) oder mehreren von diesen in einem sphärischen Gehäuse (501) des Trägheitseinschlussfusionsziels (500), oder einem Einhausungselement (801A, 801B) oder mehreren von diesen, die das Trägheitseinschlussfusionsziel (500) teilweise umgeben.

12. Verfahren nach Anspruch 11, wobei das Richten der Ausgabe des Trägheitseinschlussfensters (502) außerdem ein Abtragen einer inneren Oberfläche des Einhausungselements (801A, 801B) oder der mehreren von diesen unter Verwendung von Schwarzer-Körper-Strahlung von dem Trägheitseinschlussfusionsziel (500) aufweist.

13. Verfahren nach Anspruch 11, wobei die Ausgabe Zielbruchstücke enthält und ein Material, das von der inneren Oberfläche der Einhausungselemente (801A, 801B) abgetragen ist, mit den Zielbruchstücken interagiert.

14. Verfahren nach Anspruch 11, wobei das eine Strahlungsfenster (502) oder die mehreren von diesen einen Abschnitt des sphärischen Gehäuses (501) mit einer zweiten Dicke, die geringer als eine erste Dicke des sphärischen Gehäuses (501) ist, aufweist.

15. Verfahren nach Anspruch 11, wobei das eine Strahlungsfenster (502) oder die mehreren von diesen zwei Strahlungsfenster (502) aufweisen, die innerhalb symmetrisch entgegengesetzte Abschnitte des sphärischen Gehäuses (501) lokalisiert sind.

**16.** Verfahren nach Anspruch 11, wobei das eine Strahlungsfenster (502) oder die mehreren von diesen ein zweites Material aufweisen, das optisch dünner als das erste Material des sphärischen Gehäuses (501) ist.

**17.** Verfahren nach Anspruch 11, wobei das eine Einhausungselement (801A, 801B) oder die mehreren von diesen eine zylindrische Hülse aufweist.


**Revendications**

**1.** Cible de fusion par confinement inertiel (500) fournissant une sortie directionnelle, la cible comprenant :

un combustible (408) ;
un boîtier sphérique (501) définissant une cavité, le boîtier sphérique (501) comprenant :

un premier matériau comprenant au moins un matériau à Z moyen ou un matériau à Z élevé ; et
une ou plusieurs fenêtres de rayonnement (502) ; et
dans laquelle le combustible (408) est disposé à l'intérieur de la cavité du boîtier sphérique (501).

**2.** Cible de fusion par confinement inertiel (500) selon la revendication 1, dans laquelle les une ou plusieurs fenêtres de rayonnement (501) comprennent une partie du boîtier sphérique (501) ayant une seconde épaisseur inférieure à une première épaisseur du boîtier sphérique (501).

**3.** Cible de fusion par confinement inertiel (500) selon la revendication 1, dans laquelle les une ou plusieurs fenêtres de rayonnement (502) comprennent deux fenêtres de rayonnement (502) situées à l'intérieur de parties symétriquement opposées du boîtier sphérique (501).

**4.** Cible de fusion par confinement inertiel (500) selon la revendication 1, dans laquelle les une ou plusieurs fenêtres de rayonnement (502) comprennent un second matériau qui est optiquement plus fin que le premier matériau du boîtier sphérique (501).

**5.** Cible de fusion par confinement inertiel (500) selon la revendication 1, comprenant en outre un ou plusieurs collimateurs (601), chaque collimateur (601) est couplé à l'une des fenêtres de rayonnement (502) respectives.

**6.** Cible de fusion par confinement inertiel (500) selon la revendication 5, dans laquelle les un ou plusieurs collimateurs (601) comprennent un ou plusieurs collimateurs de forme conique ou de forme cylindrique (601).

**7.** Cible de fusion par confinement inertiel (500) selon la revendication 5, comprenant en outre un ou plusieurs éléments d'enceinte (801A, 801B), chaque élément d'enceinte (801A, 801B) définissant une ouverture (802) et chaque collimateur (601) est couplé à une partie d'un élément d'enceinte (801A, 801B) respectif entourant une ouverture (802) respective.

**8.** Cible de fusion par confinement inertiel (500) selon la revendication 1, dans laquelle les unes ou plusieurs fenêtres de rayonnement (502) définissent une région circulaire du boîtier sphérique (501).

**9.** Cible de fusion par confinement inertiel (500) selon la revendication 1, comprenant en outre :

un ou plusieurs éléments d'enceinte (801A, 801B) enfermant partiellement la cible de fusion par confinement inertiel (500).

**10.** Cible de fusion par confinement inertiel (500) selon la revendication 9, dans laquelle les un ou plusieurs éléments d'enceinte (801) comprennent un manchon cylindrique.

**11.** Procédé de direction de la sortie d'une cible de fusion par confinement inertiel (500), le procédé comprenant :

la fourniture de la cible de fusion par confinement inertiel (500) ;
l'implosion d'au moins une partie de la cible de fusion par confinement inertiel (500) ;
la direction de la sortie provenant de la cible de fusion par confinement inertiel (500) en utilisant au moins une ou plusieurs fenêtres de rayonnement (502) dans un boîtier sphérique (501) de la cible de fusion par confinement inertiel (500) ou un ou plusieurs éléments d'enceinte (801A, 801B) entourant partiellement la cible de fusion par confinement inertiel (500).

12. Procédé selon la revendication 11, dans lequel la direction de la sortie provenant de la fenêtre de confinement inertiel (502) comprend en outre l'ablation d'une surface interne des un ou plusieurs éléments d'enceinte (801A, 801B) en utilisant un rayonnement de corps noir provenant de la cible de fusion par confinement inertiel (500).

13. Procédé selon la revendication 11, dans lequel la sortie comprend des débris provenant de la cible et un matériau ablaté provenant de la surface interne des éléments d'enceinte (801A, 801B) interagit avec les débris provenant de la cible.

14. Procédé selon la revendication 11, dans lequel les une ou plusieurs fenêtres de rayonnement (502) comprennent une partie du boîtier sphérique (501) ayant une seconde épaisseur inférieure à une première épaisseur du boîtier sphérique (501).

15. Procédé selon la revendication 11, dans lequel les une ou plusieurs fenêtres de rayonnement (502) comprennent deux fenêtres de rayonnement (502) situées à l'intérieur de parties symétriquement opposées du boîtier sphérique (501).

16. Procédé selon la revendication 11, dans lequel les une ou plusieurs fenêtres de rayonnement (502) comprennent un second matériau qui est optiquement plus fin que le premier matériau du boîtier sphérique (501).

17. Procédé selon la revendication 11, dans lequel les un ou plusieurs éléments d'enceinte (801A, 801B) comprennent un manchon cylindrique.

*Figure 1-1*

EP 2 572 359 B1

*Figure 2-1*

300

310

320

330

*Figure 3-1*

*Figure 4-1*

*Figure 5A-1*

*Figure 5B-1*

*Figure 6-1*

Figure 7A-1

Figure 7B-1

*Figure 8A-1*

*Figure 8B-1*

31

900

902

Provide an ICF target

904

Imploding the ICF target

906

Directing output from the ICF target

*Figure 9-1*

EP 2 572 359 B1

Figure 3-2

*Figure 4-2*

EP 2 572 359 B1

*Figure 5-2*

*Figure 6-2*

*Figure 7-2*

*Figure 8-2*

EP 2 572 359 B1

*Figure 9-2*

Figure 10-2

*Figure 11-2*

**EP 2 572 359 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61395745 A

- US 61395762 A

**Non-patent literature cited in the description**

- Z pinch driven inertial confinement fusion target physics research at Sandia National Laboratories. **LEEPER et al.** PLASMA PHYSICS AND FUSION TECHNOLOGY (G5211) - 17. IAEA FUSION ENERGY CONFERENCE. YOKOHAMA, 1999, vol. 30, 1283-1294

- ICF Reactors - Conceptual Design Studies. A Comprehensive Treatise. **GUNTHER KESSLER ; GERALD L. KULCINKSI ; ROBERT R. PETERSON.** Nuclear Fusion by Inertial Confinement. CRC Press, 1993
- **MICHAEL MOYER.** Fusion's False Dawn. *Scientific American,* 2010

42